# EUROPÄISCHE PATENTSCHRIFT

(11) **EP 1 571 908 B1**
(45) Veröffentlichungstag und Bekanntmachung des Hinweises auf die Patenterteilung: **17.12.2014**
(21) Anmeldenummer: 03813102.5
(22) Anmeldetag: 28.11.2003
(51) Int. Cl.: A01N 47/36, A01N 47/38, A01N 25/04, A01N 43/56, A01N 25/32, A01N 25/30, A01N 25/02

(54) **ÖLSUSPENSIONSKONZENTRAT**
OIL SUSPENSION CONCENTRATE
CONCENTRE DE SUSPENSION HUILEUSE

(30) Priorität: 13.12.2002 DE 10258216; 16.04.2003 DE 10317779; 03.11.2003 DE 10351233
(43) Veröffentlichungstag der Anmeldung: 14.09.2005
(73) Patentinhaber: Bayer CropScience AG, 40789 Monheim (DE)
(72) Erfinder: DECKWER, Roland, 65929 Frankfurt Am Main (DE); HAASE, Detlev, 65929 Frankfurt (DE); KRAUSE, Hans-Peter, 65719 Hofheim (DE); SCHNABEL, Gerhard, 63820 Elsenfeld (DE)
(86) Internationale Anmeldenummer: PCT/EP2003/013389
(87) Internationale Veröffentlichungsnummer: WO 2004/054364

(56) Entgegenhaltungen:
- EP-A- 0 313 317
- WO-A-01/30156
- WO-A-01/82693
- DATABASE WPI Section Ch, Week 199515 Derwent Publications Ltd., London, GB; Class A97, AN 1995-110504 XP002277612 & JP 07 033612 A (ISHIHARA SANGYO KAISHA LTD) 3. Februar 1995 (1995-02-03)
- PATENT ABSTRACTS OF JAPAN Bd. 1995, Nr. 02, 31. März 1995 (1995-03-31) & JP 6 321713 A (MITSUBISHI PETROCHEM CO LTD), 22. November 1994 (1994-11-22)
- "Product Information Triton (TM) GR-7ME Surfactant", Dow Chemical Company , Retrieved from the Internet: URL:http://www.dow.com/scripts/litorder.as p?filepath=surfactants/pdfs/noreg/119-0210 8.pdf
- "Contents / pages i-vi /chapter 7.34 'Oil-Based Suspension Concentrates (OD) (Oil Dispersion)'" In: FAO/WHO Joint Meeting on Pesticide Specifications (JMPS): "Manual on Development and Use of FAO and WHO Specifications for Pesticides, First Edition", 2002, F A O ROME pages p. 150-153,

## Beschreibung

Die vorliegende Erfindung betrifft das Gebiet der Pflanzenschutzmittelformulierungen. Insbesondere betrifft die Erfindung flüssige Formulierungen in Form von Ölsuspensionskonzentraten, welche herbizide Wirkstoffe aus der Gruppe der Sulfonamide, insbesondere der Phenylsulfonamide und Heteroarylsulfonamide enthalten.

Wirkstoffe für den Pflanzenschutz werden im allgemeinen nicht in ihrer reinen Form eingesetzt. In Abhängigkeit von dem Anwendungsgebiet und der Anwendungsart, sowie von physikalischen, chemischen und biologischen Parametern wird der Wirkstoff in Mischung mit üblichen Hilfs- und Zusatzstoffen als Wirkstoffformulierung eingesetzt. Auch die Kombinationen mit weiteren Wirkstoffen zur Erweiterung des Wirkungsspektrum und/oder zum Schutz der Kulturpflanzen (z.B. durch Safener, Antidote) sind bekannt.

Formulierungen von Wirkstoffen für den Pflanzenschutz sollten im allgemeinen eine hohe chemische und physikalische Stabilität, eine gute Applizierbarkeit und Anwenderfreundlichkeit und eine breite biologische Wirkung mit hoher Selektivität aufweisen.

Herbizide Wirkstoffe aus der Gruppe der Sulfonamide, wie Sulfonylharnstoffe, weisen im allgemeinen ein hohes Maß an chemischer Reaktivität auf und neigen zum chemischen Abbau, z.B. durch Hydrolyse.

Eine Möglichkeit chemisch labile Wirkstoffe zu formulieren, ist die Herstellung fester Formulierungen. So sind Formulierungen von Wirkstoffen aus der Gruppe der Sulfonylharnstoffe, in Form von Pulvern, Granulaten und Tabletten bekannt (z. B. in EP 764404, WO 9834482, WO 9313658). Die Verfahren zur Herstellung von festen Formulierungen, z.B. in Form von Granulaten und Tabletten sind jedoch im allgemeinen aufwendig, insbesondere wenn niedrig schmelzende Wirkstoffe oder Hilfs- und Zusatzstoffe eingearbeitet werden. Außerdem sind feste Formulierungen im allgemeinen schwieriger zu applizieren und weniger anwenderfreundlich.

Flüssige Formulierungen von Sulfonylharnstoffen sind z.B. beschrieben in US 4599412, US 4683000, US 4671817, EP 0245058, WO 01/82693, EP 0313317, EP 0514768, EP 0163598 und EP 0514769.

In US 4683000, US 4671817, EP 0245058 sind flüssige Formulierungen von neuartigen Sulfonylharnstoffen beschrieben, die aber nicht hinsichtlich ihrer Stabilität charakterisiert sind.

In EP 0514768, EP 0163598, EP 0514769 und JP 06 321713 A sind auch einige wässrige Formulierungen von Sulfonylharnstoffen beschrieben.

in US 4599412 sind flüssige, wasserfreie Formulierungen von Sulfonamiden beschrieben, bei denen es sich um Emulsionskonzentrate (EC) handelt und in WO 01/82693 wird beschrieben, wie die geringe Löslichkeit von Sulfonylharnstoffen in den organischen Lösungsmitteln von EC-Formulierungen durch Lösungsvermittler, wie z.B. Sulfosuccinate, erhöht werden kann.

In WO 01/30156, EP 0313317 und JP 07 033612 A werden flüssige, wasserfreie Formulierungen von Sulfonamiden beschrieben, bei denen es sich um Ölsuspensionskonzentrate handelt, welche spezifische Dispergatoren verwenden um den fein verteilten Wirkstoff in Suspension zu halten.

Die Aufgabe der vorliegenden Erfindung bestand darin, eine verbesserte Pflanzenschutzmittelformulierung zur Verfügung zu stellen, welche eine hohe chemische Stabilität sowie eine hohe biologische Effektivität und Kulturpflanzenverträglichkeit aufweist.

Diese Aufgabe wird gelöst durch das spezielle Ölsuspensionskonzentrat der vorliegenden Erfindung.

Die vorliegende Erfindung betrifft somit ein Ölsuspensionskonzentrat, enthaltend
a) ein oder mehrere herbizide Wirkstoffe aus der Gruppe der Sulfonamide, in suspendierter Form,
b) ein oder mehrere Safener,
c) ein oder mehrere organische Lösungsmittel, und
d) ein oder mehrere Sulfosuccinate und
f) als übliche Hilfs- und Zusatzstoffe Tenside aus der Gruppe der nichtionische Emulgatoren und Dispergatoren, ausgewählt aus der Gruppe polyethoxylierte, gesättigte und ungesättigte aliphatische Alkohole,
   - mit 8 bis 24 C-Atomen im Alkylrest, der sich von den entsprechenden Fettsäuren oder aus petrochemischen Produkten ableitet, und
   - mit 1 bis 100, vorzugsweise 2 bis 50, Ethylenoxideinheiten (EO), wobei die freie Hydroxy-Gruppe gegebenenfalls alkoxyliert ist;
polyethoxylierte Arylalkylphenole, polyethoxylierte Alkylphenole mit einem oder mehreren Alkylresten, polyethoxylierte Hydroxyfettsäuren oder Hydroxyfettsäuren enthaltene Glyceride, polyethoxylierte Sorbitanester und Di- und Tri-block-copolymere; und gegebenenfalls weitere übliche Hilfs- und Zusatzstoffe.

Darüber hinaus kann das erfindungsgemäße Ölsuspensionskonzentrat als weitere Komponenten gegebenenfalls noch enthalten:
e) einen oder mehrere von a) und b) verschiedene agrochemische Wirkstoffe.

Unter dem Begriff Ölsuspensionskonzentrat (OD) wird ein Suspensionskonzentrat auf Basis organischer Lösungsmittel verstanden. Dabei sind ein oder mehrere Wirkstoffe in dem organischen Lösungsmittel suspendiert, weitere Wirkstoffe können in dem organischen Lösungsmittel gelöst sein.

In dem erfindungsgemäßen Ölsuspensionskonzentrat liegt das Sulfonamid a) in suspendierter Form in dem organischen Lösungsmittel ungelöst in fein verteilter Form zu mehr als 80 Gew.-% bezogen auf die Gesamtmenge an Sulfonamid vor.

Als Sulfonamide a) bevorzugt sind Phenylsulfonamide und Heteroarylsulfonamide und sonstige Sulfonamide wie Amidosulfuron. Als Phenylsulfonamide a) kommen beispielsweise Verbindungen aus der Gruppe der Phenylsulfonylaminocarbonyltriazolinone oder der Phenylsulfonylharnstoffe, bevorzugt aus der Gruppe der Phenylsulfonylharnstoffe in Frage. Unter dem Begriff Phenylsulfonylharnstoffe werden auch solche Sulfonylharnstoffe verstanden, bei denen die Phenylgruppe über einen Spacer wie CH₂, O oder NH an die Sulfongruppe (SO₂) gebunden ist. Beispiele für Phenylsulfonylaminocarbonyltriazolinone sind Flucarbazone oder Propoxycarbazone und/oder deren Salze. Die Sulfonamide a) sind kommerziell erhältlich und/oder nach bekannten Verfahren herstellbar wie sie z.B. beschrieben sind in EP-A-7687, EP-A-30138, US 5,057,144 und US 5,534,486.

Als Phenylsulfonamide kommen beispielsweise Phenylsulfonamide der allgemeinen Formel (I) und/oder deren Salze in Frage,

R^{α}-(A)ₘ-S2-NR^{β}-CO-(NR^{γ})ₙ - R^{δ} (I)

worin
- R^{α}: ein Phenylrest ist, der unsubstituiert oder substituiert ist, und wobei der Phenylrest inklusive Substituenten 1-30 C-Atome, vorzugsweise 1-20 C-Atome aufweist,
- R^{β}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- R^{γ}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- A: gleich CH₂, O oder NH, vorzugsweise O, ist,
- m: gleich Null oder 1,
- n: gleich Null oder 1, vorzugsweise gleich 1, und
- R^{δ}: ein heterocyclischer Rest wie ein Pyridylrest, ein Triazinylrest oder ein Triazolinonrest ist.

Bevorzugte Phenylsulfonamide sind Phenylsulfonylharnstoffe, beispielsweise Phenylsulfonylharnstoffe der allgemeinen Formel (II) und/oder deren Salze,

R^{α}-(A)ₘ-SO₂-NR^{β}-CO-NR^{γ}-R^{δ} (II)

worin
- R^{α}: ein Phenylrest ist, der unsubstituiert oder substituiert ist, und wobei der Phenylrest inklusive Substituenten 1-30 C-Atome, vorzugsweise 1-20 C-Atome aufweist,
- R^{β}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- R^{γ}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- A: gleich CH₂, O oder NH, vorzugsweise O, ist,
- m: gleich Null oder 1, und
- R^{δ}: ein heterocyclischer Rest wie ein Pyridylrest oder ein Triazinylrest ist.

Bevorzugt sind Phenylsulfonylharnstoffe der Formel (III) und/oder deren Salze, 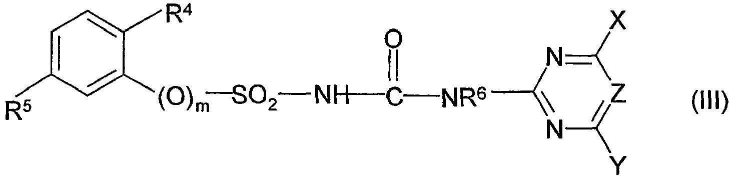 worin
- R⁴: C₁-C₄-Alkoxy, vorzugsweise C₂-C₄-Alkoxy, oder CO-R^{a} ist, worin R^{a} gleich OH, C₁-C₄-Alkoxy oder NR^{b}R^{c} ist, worin R^{b} und R^{c} unabhängig voneinander gleich oder verschieden H oder C₁-C₄-Alkyl sind,
- R⁵: Halogen, vorzugsweise Iod, oder (A)ₙ-NR^{d}R^{e} ist, worin n gleich Null oder 1 ist, A eine Gruppe CR'R" ist, worin R' und R" unabhängig voneinander gleich oder verschieden H oder C₁-C₄-Alkyl sind, R^{d} gleich H oder C₁-C₄-Alkyl ist und R^{e} ein Acylrest wie Formyl oder C₁-C₄-Alkyl-Sulfonyl ist, und R⁵ für den Fall, daß R⁴ gleich C₁-C₄-Alkoxy, vorzugsweise C₂-C₄-Alkoxy, bedeutet auch H sein kann,
- R⁶: H oder C₁-C₄-Alkyl ist,
- m: gleich Null oder 1 ist,
- X und Y: unabhängig voneinander gleich oder verschieden Halogen oder NR'R", worin R' und R" gleich oder verschieden H oder C₁-C₄-Alkyl sind, oder C₁-C₆-Alkyl, C₁-C₆-Alkoxy, C₁-C₆-Alkylthio, C₃-C₆-Cycloalkyl, C₂-C₆-Alkenyl, C₂-C₆-Alkynyl, C₃-C₆-Alkenyloxy oder C₃-C₆-Alkynyloxy sind, wobei jeder der acht letztgenannten Reste unsubstituiert oder durch einen oder mehrere Reste aus der Gruppe Halogen, C₁-C₄-Alkoxy und C₁-C₄-Alkylthio substituiert ist, vorzugsweise C₁-C₄-Alkyl oder C₁-C₄-Alkoxy, und
- Z: gleich CH oder N ist.

Besonders bevorzugt sind Phenylsulfonylharnstoffe der allgemeinen Formel (III) und/oder deren Salze, worin
a) R⁴ gleich CO-(C₁-C₄-Alkoxy) ist, R⁵ gleich Halogen, vorzugsweise Jod ist, oder R⁵ gleich CH₂-NHR^{e} ist, worin R^{e} ein Acylrest, vorzugsweise C₁-C₄-Alkyl-Sulfonyl ist, und m gleich Null ist,
b) R⁴ gleich CO-N(C₁-C₄-Alkyl)₂, R⁵ gleich NHR^{e} ist, worin R^{e} ein Acylrest, vorzugsweise Formyl ist, und m gleich Null ist, oder
c) R⁴ gleich C₂-C₄-Alkoxy, R⁵ gleich H und m gleich 1 ist.

Typische Phenylsulfonylharnstoffe sind unter anderem die nachfolgend aufgeführten Verbindungen und deren Salze wie die Natriumsalze: Bensulfuron-methyl, Chlorimuron-Ethyl, Chlorsulfuron, Cinosulfuron, Cyclosulfamuron, Ethametsulfuronmethyl, Ethoxysulfuron und dessen Natriumsalz, Metsulfuron-methyl, Oxasulfuron, Primisulfuron-methyl, Prosulfuron, Sulfometuron-methyl, Triasulfuron, Tribenuron-methyl, Triflusulfuron-methyl, Tritosulfuron, lodosulfuron-methyl und dessen Natriumsalz (WO 92/13845), Mesosulfuron-methyl und dessen Natriumsalz (Agrow Nr. 347, 3. März 2000, Seite 22 (PJB Publications Ltd. 2000)) und Foramsulfuron und dessen Natriumsalz (Agrow Nr. 338, 15. Oktober 1999, Seite 26 (PJB Pubtications Ltd. 1999)).

Besonders bevorzugte Phenylsulfonamide sind: Iodosulfuron-methyl (A1.1) und dessen Natriumsalz (A1.2), Mesosulfuron-methyl (A2.1) und dessen Natriumsalz (A2.2), Foramsulfuron (A3.1) und dessen Natriumsalz (A3.2), Flucarbazone (A4.1) und dessen Natriumsalz (A4.2), Propoxycarbazone (A5.1) und dessen Natriumsalz (A5.2) und Ethoxysulfuron (A6.1) und dessen Natriumsalz (A6.2), Metsulfuron-methyl (A7.1) und dessen Natriumsalz (A7.2), Tribenuron-methyl (A8.1) und dessen Natriumsalz (A8.2), Chlorsulfuron (A9.1) und dessen Natriumsalz (A9.2).

Die vorstehend aufgeführten Wirkstoffe sind z.B. bekannt aus "The Pesticide Manual", 12. Auflage (2000), The British Crop Protection Council oder den nach den einzelnen Wirkstoffen aufgeführten Literaturstellen.

Als Heteroarylsulfonamide a) kommen beispielsweise Verbindungen aus der Gruppe der Heteroarylsulfonylaminocarbonyltriazolinone oder der Heteroarylsulfonylharnstoffe, bevorzugt aus der Gruppe der Heteroarylsulfonylharnstoffe in Frage. Unter dem Begriff Heteroarylsulfonylharnstoffe werden auch solche Sulfonylharnstoffe verstanden, bei denen die Heteroarylgruppe über einen Spacer wie CH₂, O oder NH an die Sulfongruppe (SO₂) gebunden ist.

Als Heteroarylsulfonamide kommen beispielsweise Sulfonamide der allgemeinen Formel (IV) und/oder deren Salze in Frage,

R^{α'}-(A')_{m'}-SO₂-NR^{β'}-CO-(NR^{γ'})_{n'}- R^{δ'} (IV)

worin
- R^{α'}: ein Heteroarylrest ist, der unsubstituiert oder substituiert ist, und wobei der Heteroarylrest inklusive Substituenten 1-30 C-Atome, vorzugsweise 1-20 C-Atome aufweist,
- R^{β}': ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- R^{γ'}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- A': gleich CH₂, O oder NH, vorzugsweise O, ist,
- m': gleich Null oder 1,
- n': gleich Null oder 1, vorzugsweise gleich 1, und
- R^{δ'}: ein heterocyclischer Rest wie ein Pyridylrest, ein Triazinylrest oder ein Triazolinonrest ist.

Bevorzugte Heteroarylsulfonamide sind Heteroarylsulfonylharnstoffe, beispielsweise Sulfonylharnstoffe der allgemeinen Formel (V) und/oder deren Salze,

R^{α'}-(A')_{m'}-SO₂-NR^{β'}-CO-NR^{γ'}- R^{δ'} (V)

worin
- R^{α}': ein Heteroarylrest ist, der unsubstituiert oder substituiert ist, und wobei der Heteroarylrest inklusive Substituenten 1-30 C-Atome, vorzugsweise 1-20 C-Atome aufweist,
- R^{β}': ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- R^{γ}': ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- A': gleich CH₂, O oder NH, vorzugsweise O, ist,
- m': gleich Null oder 1, und
- R^{δ}': ein heterocyclischer Rest wie ein Pyridylrest oder ein Triazinylrest ist.

Besonders bevorzugt sind Heteroarylsulfonamide der nachfolgend genannten Formel (VI),

R^{α'}-SO₂-NH-CO-(NR^{γ'})_{n'}—R^{δ'} (VI)

,worin
- R^{α}': ein substituierter Heteroarylrest, wie substituiertes Pyridyl, Thienyl, Pyrazolyl oder Imidazolyl,
- R^{γ}': H, (C₁-C₃)Alkyl, optional substituiert mit Halogen (F, C, Br, I) oder (Halo)Alkoxy (C₁-C₃), bevorzugt H oder Methyl,
- für n': gleich 1, R^{δ}' ein Pyridylrest oder ein Triazinylrest ist, vorzugsweise 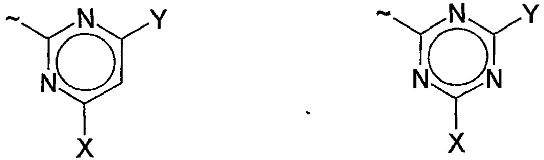
und für n' gleich Null, R^{δ}' ein Triazolinonrest ist, vorzugsweise 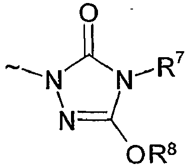
- R⁷: (C₁-C₁₀)Alkyl, welches optional substituiert ist mit Halogen (F, Cl, Br, I) oder (C₁-C₃)Halo-Alkyl,
- R⁸: (C₁-C₁₀)Alkyl, welches optional substituiert ist mit Halogen (F, Cl, Br, I) oder (C₁-C₃)Halo-Alkyl,
- X und Y: unabhängig voneinander gleich oder verschieden Halogen oder NR'R", worin R' und R" gleich oder verschieden H oder C₁-C₄-Alkyl sind, oder C₁-C₆-Alkyl, C₁-C₆-Alkoxy, C₁-C₆-Alkylthio, C₃-C₆-Cycloalkyl, C₂-C₆-Alkenyl, C₂-C₆-Alkynyl, C₃-C₆-Alkenyloxy oder C₃-C₆-Alkynyloxy sind, wobei jeder der acht letztgenannten Reste unsubstituiert oder durch einen oder mehrere Reste aus der Gruppe Halogen, C₁-C₄-Alkoxy und C₁-C₄-Alkylthio substituiert ist, vorzugsweise C₁-C₄-Alkyl oder C₁-C₄-Alkoxy.

Besonders bevorzugt ist R^{α}' gleich 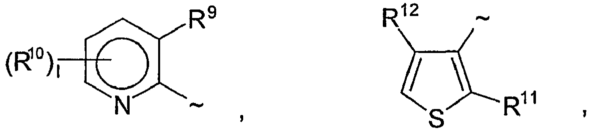 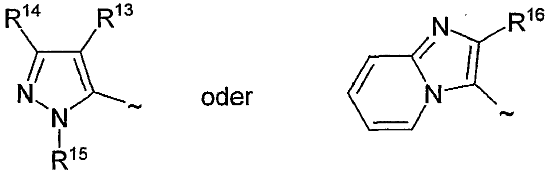 , worin
- R⁹: (C₁-C₆)Alkyl, (C₁-C₆)Alkoxy, (C₂-C₆)Alkenyloxy, (C₂-C₆)Alkinyloxy, (C₁-C₆)Alkylsulfonyl, (C₁-C₆)Alkylcarbonyl, (C₁-C₆)Alkoxycarbonyl, (C₂-C₆)Alkenyloxycarbonyl, (C₂-C₆)Alkinyloxycarbonyl, CONR'R", (C₁-C₆)Halo-Alkyl, (C₁-C₆)Halo-Alkoxy, (C₂-C₆)Halo-Alkenyloxy, (C₂-C₆)Halo-Alkinyloxy, (C₁-C₆)Halo-Alkylsulfonyl, (C₁-C₆)Halo-Alkylcarbonyl, (C₁-C₆)Halo-Alkoxycarbonyl, (C₂-C₆)Halo-Alkenyloxycarbonyl, (C₂-C₆)Halo-Alkinyloxycarbonyl,
- R¹⁰: H, (C₁-C₃)Alkyl, (C₁-C₃)Alkoxy, (C₁-C₃)Halo-Alkyl, (C₁-C₃)Halo-Alkoxy oder Halogen (F, Cl, Br, I),
- I: Null oder 1,
- R¹¹: (C₁-C₆)Alkyl, (C₁-C₆)Alkoxy, (C₂-C₆)Alkenyloxy, (C₂-C₆)Alkinyloxy, (C₁-C₆)Alkylsulfonyl, (C₁-C₆)Alkylcarbonyl, (C₁-C₆)Alkoxycarbonyl, (C₂-C₆)Alkenyloxycarbonyl, (C₂-C₆)Alkinyloxycarbonyl, (C₁-C₆)Halo-Alkyl, (C₁-C₆)Halo-Alkoxy, (C₂-C₆)Halo-Alkenyloxy, (C₂-C₆)Halo-Alkinyloxy, (C₁-C₆)Halo-Alkylsulfonyl, (C₁-C₆)Halo-Alkylcarbonyl, (C₁-C₆)Halo-Alkoxycarbonyl, (C₂-C₆)Halo-Alkenyloxycarbonyl, (C₂-C₆)Halo-Alkinyloxycarbonyl, CONR'R",
- R¹²: Halogen (F, Cl, Br, I), (C₁-C₆)Alkyl, (C₁-C₆)Alkoxy, (C₁-C₆)Alkylsulfonyl, (C₁-C₆)Alkoxycarbonyl, (C₂-C₆)Alkenyloxycarbonyl, (C₂-C₆)Alkinyloxycarbonyl, (C₁-C₆)Halo-Alkyl, (C₁-C₆)Halo-Alkoxy, (C₁-C₆)Halo-Alkylsulfonyl, (C₁-C₆)Halo-Alkoxycarbonyl, (C₂-C₆)Halo-Alkenyloxycarbonyl, (C₂-C₆)Halo-Alkinyloxycarbonyl,
- R¹³: (C₁-C₆)Alkoxycarbonyl, (C₂-C₆)Alkenyloxycarbonyl, (C₂-C₆)Alkinyloxycarbonyl, (C₁-C₆)Alkyl, (C₁-C₆)Alkoxy, (C₁-C₆)Alkylsulfonyl, (C₁-C₆)Halo-Alkoxycarbonyl, (C₂-C₆)Halo-Alkenyloxycarbonyl, (C₂-C₆)Halo-Alkinyloxycarbonyl, (C₁-C₆)Halo-Alkyl, (C₁-C₆)Halo-Alkoxy, (C₁-C₆)Halo-Alkylsulfonyl, Halogen (F, Cl, Br, I), CONR'R", oder R¹³ ist ein heterocylischer Ring der gesättigt, ungesättigt oder aromatisch sein kann und vorzugsweise 4-6-Ringatome und eines oder mehrere Heteroatome aus der Gruppe N, O, S enthält, und optional durch einen oder mehrere Substituenten, vorzugsweise aus der Gruppe (C₁-C₃)Alkyl, (C₁-C₃)Alkoxy, (C₁-C₃)Halo-Alkyl, (C₁-C₃)Halo-Alkoxy oder Halogen substituiert sein kann, besonders bevorzugt 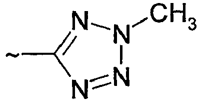
- R¹⁴: H, Halogen (F, C, Br, I), (C₁-C₆)Alkyl, (C₁-C₆)Halo-Alkyl,
- R¹⁵: H, (C₁-C₆)Alkyl, (C₁-C₆)Halo-Alkyl,
- R¹⁶: (C₁-C₆)Alkyl, (C₁-C₆)Alkoxy, (C₂-C₆)Alkenyloxy, (C₂-C₆)Alkinyloxy, (C₁-C₆)Alkylsulfonyl, (C₁-C₆)Alkylcarbonyl, (C₁-C₆)Alkoxycarbonyl, (C₂-C₆)Alkenyloxycarbonyl, (C₂-C₆)Alkinyloxycarbonyl, (C₁-C₆)Halo-Alkyl, (C₁-C₆)Halo-Alkoxy, (C₂-C₆)Halo-Alkenyloxy, (C₂-C₆)Halo-Alkinyloxy, (C₁-C₆)Halo-Alkylsulfonyl, (C₁-C₆)Halo-Alkylcarbonyl, (C₁-C₆)Halo-Alkoxycarbonyl, (C₂-C₆)Halo-Alkenyloxycarbonyl, (C₂-C₆)Halo-Alkinyloxycarbonyl, CONR'R", insbesondere SO₂Ethyl und
- R' und R": unabhängig voneinander H, (C₁-C₆)Alkyl, (C₁-C₆)Haloalkyl, (C₂-C₆)Alkenyl, (C₂-C₆)Haloalkenyl, (C₂-C₆)Alkinyl, (C₂-C₆)Haloalkinyl sind, oder NR'R" bildet einen heterocylischen Ring der gesättigt, ungesättigt oder aromatisch sein kann und vorzugsweise 4-6-Ringatome und eines oder mehrere Heteroatome aus der Gruppe N, O, S enthält, und optional durch einen oder mehrere Substituenten, vorzugsweise aus der Gruppe (C₁-C₃)Alkyl, (C₁-C₃)Alkoxy, (C₁-C₃)Halo-Alkyl, (C₁-C₃)Halo-Alkoxy oder Halogen substituiert sein kann.

Besonders bevorzugte Heteroarylsulfonylharnstoffe sind z.B. Nicosulfuron (A10.1) und dessen Salze wie das Natriumsalz (A10.2), Rimsulfuron (A11.1) und dessen Salze wie das Natriumsalz (A11.2), Thifensulfuron-Methyl (A12.1) und dessen Salze wie das Natriumsalz (A12.2), Pyrazosulfuron-Ethyl (A13.1) und dessen Salze wie das Natriumsalz (A13.2), Flupyrsulfuron-Methyl (A14.1) und dessen Salze wie das Natriumsalz (A14.2), Sulfosulfuron (A15.1) und dessen Salze wie das Natriumsalz (A15.2), Trifloxysulfuron (A16.1) und dessen Salze wie das Natriumsalz (A16.2), Azimsulfuron (A17.1) und dessen Salze wie das Natriumsalz (A17.2), Flazasulfuron (A18.1) und dessen Salze wie das Natriumsalz (A18.2) und Flucetosulfuron (1-[3-[[[[(4,6-dimethoxy-2-pyrimidinyl)amino]carbonyl]amino]sulfonyl]-2-pyridinyl]-2-fluoropropyl methoxyacetat, (A19.1)) und dessen Salze wie das Natriumsalz (A 19.2). Besonders bevorzugte Heteroarylsulfonylaminocarbonyltriazolinone sind die nachfolgend genannten Verbindungen der Formel (VII), die z.B. bekannt sind aus WO 03/026427.

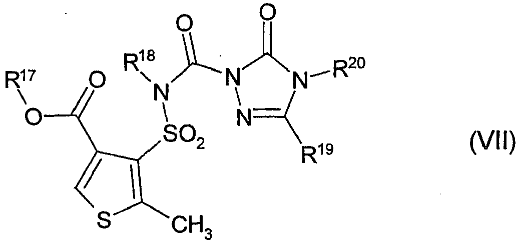

| Verbindung Nr. | R¹⁷ | R¹⁸ | R¹⁹ | R²⁰ |
|---|---|---|---|---|
| A20.1 | CH₃ | H | OC₂H₅ | CH₃ |
| A20.2 | CH₃ | Na | OC₂H₅ | CH₃ |
| A21.1 | CH₃ | H | OCH₃ | CH₃ |
| A21.2 | CH₃ | Na | OCH₃ | CH₃ |
| A22.1 | CH₃ | H | OC₃H₇-n | CH₃ |
| A22.2 | CH₃ | Na | OC₃H₇-n | CH₃ |
| A23.1 | CH₃ | H | OC₃H₇-i | CH₃ |
| A23.2 | CH₃ | Na | OC₃H₇-i | CH₃ |
| A24.1 | CH₃ | H | OCH₃ | cyclo-propyl |
| A24.2 | CH₃ | Na | OCH₃ | cyclo-propyl |
| A25.1 | CH₃ | H | OC₂H₅ | cyclo-propyl |
| A25.2 | CH₃ | Na | OC₂H₅ | cyclo-propyl |
| A26.1 | CH₃ | H | OC₃H₇-n | cyclo-propyl |
| A26.2 | CH₃ | Na | OC₃H₇-n | cyclo-propyl |
| A27.1 | CH₃ | H | OC₃H₇-i | cyclo-propyl |
| A27.2 | CH₃ | Na | OC₃H₇-i | cyclo-propyl |
| A28.1 | CH₃ | H | cyclo-propyl | cyclo-propyl |
| A28.2 | CH₃ | Na | cyclo-propyl | cyclo-propyl |
| A29.1 | CH₃ | H | CH₃ | CH₃ |
| A29.2 | CH₃ | Na | CH₃ | CH₃ |
| A30.1 | CH₃ | H | C₂H₅ | CH₃ |
| A30.2 | CH₃ | Na | C₂H₅ | CH₃ |
| A31.1 | CH₃ | H | SCH₃ | CH₃ |
| A31.2 | CH₃ | Na | SCH₃ | CH₃ |
| A32.1 | CH₃ | H | OCH₃ | CH₃ |
| A32.2 | CH₃ | Na | OCH₃ | CH₃ |
| A33.1 | CH₃ | H | CH₂OCH₃ | cyclo-propyl |
| A33.2 | CH₃ | Na | CH₂OCH₃ | cyclo-propyl |
| A34.1 | CH₃ | H | OC₂H₅ | CH₃ |
| A34.2 | CH₃ | Na | OC₂H₅ | CH₃ |
| A35.1 | CH₃ | H | OCH₃ | cyclo-propyl |
| A35.2 | CH₃ | Na | OCH₃ | cyclo-propyl |
| A36.1 | CH₃ | H | C₂H₅ | OC₂H₅ |
| A36.2 | CH₃ | Na | C₂H₅ | OC₂H₅ |
| A37.1 | CH₃ | H | C₂H₅ | cyclo-propyl |
| A37.2 | CH₃ | Na | C₂H₅ | cyclo-propyl |

Die vorstehend aufgeführten Wirkstoffe sind z.B. bekannt aus "The Pesticide Manual", 12. Auflage (2000) (PM) und 13. Auflage (2003), The British Crop Protection Council oder den nach den einzelnen Wirkstoffen aufgeführten Literaturstellen.

Unter den in den erfindungsgemäßen Ölsuspensionskonzentraten als Komponente enthaltenen Sulfonamiden a) werden im Sinne der vorliegenden Erfindung sind stets sämtliche Anwendungsformen wie Säuren, Ester, Salze und Isomere wie Stereoisomere und optische Isomere verstanden. So sind neben den neutralen Verbindungen stets auch deren Salze mit anorganischen und/oder organischen Gegenionen zu verstehen. So können Sulfonamide z.B. Salze bilden, bei denen der Wasserstoff der -SO₂-NH-Gruppe durch ein für die Landwirtschaft geeignetes Kation ersetzt ist. Diese Salze sind beispielsweise Metallsalze, insbesondere Alkalimetallsalze oder Erdalkalimetallsalze, insbesondere Natrium- und Kaliumsalze, oder auch Ammoniumsalze oder Salze mit organischen Aminen. Ebenso kann Salzbildung durch Anlagerung einer Säure an basischen Gruppen, wie z.B. Amino und Alkylamino, erfolgen. Geeignete Säuren hierfür sind starke anorganische und organische Säuren, beispielsweise HCl, HBr, H₂SO₄ oder HNO₃. Bevorzugte Ester sind die Alkylester, insbesondere die C₁-C₁₀-Alkylester wie Methylester.

Soweit in dieser Beschreibung der Begriff Acylrest verwendet wird, bedeutet dieser den Rest einer organischen Säure, der formal durch Abspaltung einer OH-Gruppe aus der organischen Säure entsteht, z.B. der Rest einer Carbonsäure und Reste davon abgeleiteter Säuren wie der Thiocarbonsäure, gegebenenfalls N-substituierten Iminocarbonsäuren oder die Reste von Kohlensäuremonoestern, gegebenenfalls N-substituierter Carbaminsäuren, Sulfonsäuren, Sulfinsäuren, Phosphonsäuren, Phosphinsäuren.

Ein Acylrest ist bevorzugt Formyl oder Acyl aus der Gruppe CO-R^{z}, CS-R^{z}, CO-OR^{z}, CS-OR^{z}, CS-SR^{z}, SOR^{z} oder SO₂R^{z}, wobei R^{z} jeweils einen C₁-C₁₀-Kohlenwasserstoffrest wie C₁-C₁₀-Alkyl oder C₆-C₁₀-Aryl bedeutet, der unsubstituiert oder substituiert ist, z.B. durch einen oder mehrere Substituenten aus der Gruppe Halogen wie F, Cl, Br, I, Alkoxy, Haloalkoxy, Hydroxy, Amino, Nitro, Cyano oder Alkylthio, oder R^{z} bedeutet Aminocarbonyl oder Aminosulfonyl, wobei die beiden letztgenannten Reste unsubstituiert, N-monosubstituiert oder N,N-disubstituiert sind, z.B. durch Substituenten aus der Gruppe Alkyl oder Aryl.

Acyl bedeutet beispielsweise Formyl, Halogenalkylcarbonyl, Alkylcarbonyl wie (C₁-C₄)Alkylcarbonyl, Phenylcarbonyl, wobei der Phenylring substituiert sein kann, oder Alkyloxycarbonyl, wie (C₁-C₄) Alkyloxycarbonyl, Phenyloxycarbonyl, Benzyloxycarbonyl, Alkylsulfonyl, wie (C₁-C₄) Alkylsulfonyl, Alkylsulfinyl, wie C₁-C₄(Alkylsulfinyl), N-Alkyl-1-iminoalkyl, wie N-(C₁-C₄)-1-imino-(C₁-C₄)alkyl und andere Reste von organischen Säuren.

Ein Kohlenwasserstoffrest bedeutet ein geradkettiger, verzweigter oder cyclischer und gesättigter oder ungesättigter aliphatischer oder aromatischer Kohlenwasserstoffrest, z.B. Alkyl, Alkenyl, Alkinyl, Cycloalkyl, Cycloalkenyl oder Aryl. Ein Kohlenwasserstoffrest weist bevorzugt 1 bis 40 C-Atome, vorzugsweise 1 bis 30 C-Atome auf; besonders bevorzugt bedeutet ein Kohlenwasserstoffrest Alkyl, Alkenyl oder Alkinyl mit bis zu 12C-Atomen oder Cycloalkyl mit 3, 4, 5, 6 oder 7 Ringatomen oder Phenyl.

Aryl bedeutet ein mono-, bi- oder polycyclisches aromatisches System, beispielsweise Phenyl, Naphthyl, Tetrahydronaphthyl, Indenyl, Indanyl, Pentalenyl, Fluorenyl und ähnliches, vorzugsweise Phenyl.

Ein heterocyclischer Rest oder Ring (Heterocyclyl) kann gesättigt, ungesättigt oder heteroaromatisch und unsubstituiert oder substituiert sein; er enthält vorzugsweise ein oder mehrere Heteroatome im Ring, vorzugsweise aus der Gruppe N, O und S; vorzugsweise ist er ein aliphatischer Heterocyclylrest mit 3 bis 7 Ringatomen oder ein heteroaromatischer Rest mit 5 oder 6 Ringatomen und enthält 1, 2 oder 3 Heteroatome. Der heterocyclische Rest kann z.B. ein heteroaromatischer Rest oder Ring (Heteroaryl) sein, wie z.B. ein mono-, bi- oder polycyclisches aromatisches System, in dem mindestens 1 Ring ein oder mehrere Heteroatome enthält, beispielsweise Pyridyl, Pyrimidinyl, Pyridazinyl, Pyrazinyl, Triazinyl, Thienyl, Thiazolyl, Oxazolyl, Furyl, Pyrrolyl, Pyrazolyl und Imidazolyl, oder ist ein partiell oder vollständig hydrierter Rest wie Oxiranyl, Oxetanyl, Pyrrolidyl, Piperidyl, Piperazinyl, Triazolyl, Dioxolanyl, Morpholinyl, Tetrahydrofuryl. Bevorzugt sind Pyrimidinyl und Triazinyl. Als Substituenten für einen substituierten heterocyclischen Rest kommen die weiter unten genannten Substituenten in Frage, zusätzlich auch Oxo. Die Oxogruppe kann auch an den Heteroringatomen, die in verschiedenen Oxidationsstufen existieren können, z.B. bei N und S, auftreten.

Substituierte Reste, wie substituierte Kohlenwasserstoffreste, z.B. substituiertes Alkyl, Alkenyl, Alkinyl, Aryl, Phenyl und Benzyl, oder substituiertes Heterocyclyl oder Heteroaryl, bedeuten beispielsweise einen vom unsubstituierten Grundkörper abgeleiteten substituierten Rest, wobei die Substituenten beispielsweise einen oder mehrere, vorzugsweise 1, 2 oder 3 Reste aus der Gruppe Halogen, Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino, wie Acylamino, Mono- und Dialkylamino, und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Resten entsprechende ungesättigte aliphatische Reste, wie Alkenyl, Alkinyl, Alkenyloxy, Alkinyloxy etc. bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor und Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Haloalkoxy, Nitro und Cyano. Besonders bevorzugt sind dabei die Substituenten Methyl, Methoxy und Chlor.

Gegebenenfalls substituiertes Phenyl ist vorzugsweise Phenyl, das unsubstituiert oder ein- oder mehrfach, vorzugsweise bis zu dreifach durch gleiche oder verschiedene Reste, vorzugsweise aus der Gruppe Halogen, (C₁-C₄)Alkyl, (C₁-C₄)Alkoxy, (C₁-C₄)Halogenalkyl, (C₁-C₄)Halogenalkoxy und Nitro substituiert ist, z.B. o-, m- und p-Tolyl, Dimethylphenyl, 2-, 3- und 4-Chlorphenyl, 2-, 3- und 4-Trifluor- und -Trichlorphenyl, 2,4-, 3,5-, 2,5- und 2,3-Dichlorphenyl, o-, m- und p-Methoxyphenyl.

Cycloalkyl bedeutet ein carbocyclisches, gesättigtes Ringsystem vorzugsweise mit 3-6 C-Atomen, z.B. Cyclopropyl, Cyclobutyl, Cyclopentyl oder Cyclohexyl.

Die kohlenstoffhaltigen Reste wie Alkyl, Alkoxy, Haloalkyl, Haloalkoxy, Alkylamino und Alkylthio sowie die entsprechenden ungesättigten und/oder substituierten Reste im Kohlenstoffgerüst jeweils geradkettig oder verzweigt sein. Wenn nicht speziell angegeben, sind bei diesen Resten die niederen Kohlenstoffgerüste, z.B. mit 1 bis 6 C-Atomen bzw. bei ungesättigten Gruppen mit 2 bis 6 C-Atomen, bevorzugt. Alkylreste, auch in den zusammengesetzten Bedeutungen wie Alkoxy, Haloalkyl usw., bedeuten z.B. Methyl, Ethyl, n- oder i-Propyl, n-, i-, t- oder 2-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl; Alkenyl- und Alkinylreste haben die Bedeutung der den Alkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl; Alkinyl bedeutet z.B. Propargyl, But-2-in-1-yl, But-3-in-1-yl, 1-Methyl-but-3-in-1-yl.

Halogen bedeutet beispielsweise Fluor, Chlor, Brom oder Iod. Haloalkyl, -alkenyl und -alkinyl bedeuten durch Halogen, vorzugsweise durch Fluor, Chlor und/oder Brom, insbesondere durch Fluor oder Chlor, teilweise oder vollständig substituiertes Alkyl, Alkenyl bzw. Alkinyl, z.B. CF₃, CHF₂, CH₂F, CF₃CF₂, CH₂FCHCl, CCl₃, CHCl₂, CH₂CH₂Cl; Haloalkoxy ist z.B. OCF₃, OCHF₂, OCH₂F, CF₃CF₂O, OCH₂CF₃ und OCH₂CH₂Cl; entsprechendes gilt für Haloalkenyl und andere durch Halogen substituierte Reste.

Die herbiziden Wirkstoffe a) aus der Reihe der Sulfonamide sind in den erfindungsgemäßen Ölsuspensionskonzentraten im allgemeinen in Mengen von 0,01 bis 50 Gew.%, bevorzugt 0,1 bis 30 Gew.% enthalten, dabei bezieht sich die Angabe "Gew.%" hier und in der gesamten Beschreibung, wenn nicht anders definiert, auf das relative Gewicht der jeweiligen Komponente bezogen auf das Gesamtgewicht der Formulierung.

Als Komponente b) sind in den erfindungsgemäßen Ölsuspensionskonzentraten Safener enthalten, die geeignet sind, Schäden an der Kulturpflanze zu reduzieren oder zu vermeiden. Geeignete Safener sind z.B. aus WO-A-96/14747 und der dort zitierten Literatur bekannt. Die Safener können in dem organischen Lösungsmittel in suspendierter und/oder in gelöster Form, vorzugsweise in gelöster Form vorliegen.

Folgende Gruppen von Verbindungen sind beispielsweise als Safener geeignet:
1) Verbindungen vom Typ der Dichlorphenylpyrazolin-3-carbonsäure (S1), vorzugsweise Verbindungen wie 1-(2,4-Dichlorphenyl)-5-(ethoxycarbonyl)-5-methyl-2-pyrazolin-3-carbonsäureethylester (S1-1, Mefenpyr-diethyl, PM S. 781 - 782), und verwandte Verbindungen, wie sie in der WO 91/07874 beschrieben sind,
2) Derivate der Dichlorphenylpyrazolcarbonsäure, vorzugsweise Verbindungen wie 1-(2,4-Dichlorphenyl)-5-methyl-pyrazol-3-carbonsäureethylester (S1-2), 1-(2,4-Dichlorphenyl)-5-isopropyl-pyrazol-3-carbonsäureethylester (S1-3), 1-(2,4-Dichlorphenyl)-5-(1,1-dimethyl-ethyl)pyrazol-3-carbonsäureethyl-ester (S1-4), 1-(2,4-Dichlorphenyl)-5-phenyl-pyrazol-3-carbonsäureethylester (S1-5) und verwandte Verbindungen, wie sie in EP-A-333 131 und EP-A-269 806 beschrieben sind.
3) Verbindungen vom Typ der Triazolcarbonsäuren (S1), vorzugsweise Verbindungen wie Fenchlorazol, d.h. 1-(2,4-Dichlorphenyl)-5-trichlormethyl-(1 H)-1,2,4-triazol-3-carbonsäureethylester (S1-6, Fenchlorazol-ethyl, PM S. 385-386), und verwandte Verbindungen (siehe EP-A-174 562 und EP-A-346 620);
4) Verbindungen vom Typ der 5-Benzyl- oder 5-Phenyl-2-isoxazolin-3-carbonsäure, oder der 5,5-Diphenyl-2-isoxazolin-3-carbonsäure vorzugsweise Verbindungen wie 5-(2,4-Dichlorbenzyl)-2-isoxazolin-3-carbonsäureethylester (S1-7) oder 5-Phenyl-2-isoxazolin-3-carbonsäureethylester (S1-8) und verwandte Verbindungen, wie sie in WO 91/08202 beschrieben sind, bzw. der 5,5-Diphenyl-2-isoxazolin-carbonsäureethylester (S1-9, Isoxadifen-ethyl) oder -n-propylester (S1-10) oder der 5-(4-Fluorphenyl)-5-phenyl-2-isoxazolin-3-carbonsäureethylester (S1-11), wie sie in der Patentanmeldung (WO-A-95/07897) beschrieben sind.
5) Verbindungen vom Typ der 8-Chinolinoxyessigsäure (S2), vorzugsweise (5-Chlor-8-chinolinoxy)-essigsäure-(1-methyl-hex-1-yl)-ester (S2-1 Cloquintocet-mexyl, PM S. 263 - 264), (5-Chlor-8-chinolinoxy)-essigsäure-(1,3-dimethyl-but-1-yl)-ester (S2-2), (5-Chlor-8-chinolinoxy)-essigsäure-4-allyl-oxy-butylester (S2-3), (5-Chlor-8-chinolinoxy)-essigsäure-1-allyloxy-prop-2-ylester (S2-4), (5-Chlor-8-chinolinoxy)-essigsäureethylester (S2-5), (5-Chlor-8-chinolinoxy)-essigsäuremethylester (S2-6), (5-Chlor-8-chinolinoxy)-essigsäureallylester (S2-7), (5-Chlor-8-chinolinoxy)-essigsäure-2-(2-propyliden-iminoxy)-1-ethylester (S2-8), (5-Chlor-8-chinolinoxy)-essigsäure-2-oxo-prop-1-ylester (S2-9) und verwandte Verbindungen, wie sie in EP-A-86 750, EP-A-94 349 und EP-A-191 736 oder EP-A-0 492 366 beschrieben sind.
6) Verbindungen vom Typ der (5-Chlor-8-chinolinoxy)-malonsäure, vorzugsweise Verbindungen wie (5-Chlor-8-chinolinoxy)-malonsäure-diethylester, (5-Chlor-8-chinolinoxy)-malonsäurediallylester, (5-Chlor-8-chinolinoxy)-malonsäure-methyl-ethylester und verwandte Verbindungen, wie sie in EP-A-0 582 198 beschrieben sind.
7) Wirkstoffe vom Typ der Phenoxyessig- bzw. -propionsäurederivate bzw. der aromatischen Carbonsäuren, wie z.B. 2,4-Dichlorphenoxyessigsäure(ester) (2,4-D), 4-Chlor-2-methyl-phenoxy-propionester (Mecoprop), MCPA oder 3,6-Dichlor-2-methoxy-benzoesäure(ester) (Dicamba).
8) Wirkstoffe vom Typ der Pyrimidine, wie "Fenclorim" (PM, S. 512-511) (= 4,6-Dichlor-2-phenylpyrimidin),
9) Wirkstoffe vom Typ der Dichloracetamide, die häufig als Vorauflaufsafener (bodenwirksame Safener) angewendet werden, wie z.B.
   "Dichlormid" (PM, S. 363-364) (= N,N-Diallyl-2,2-dichloracetamid), "R-29148" (= 3-Dichloracetyl-2,2,5-trimethyl-1,3-oxazolidon von der Firma Stauffer),
   "Benoxacor" (PM, s. 102-103) (= 4-Dichloracetyl-3,4-dihydro-3-methyl-2H-1,4-benzoxazin).
   "PPG-1292" (= N-Allyl-N[(1,3-dioxolan-2-yl)-methyl]dichloracetamid von der Firma PPG Industries),
   "DK-24" (= N-Allyl-N-[(allylaminocarbonyl)-methyl]-dichloracetamid von der Firma Sagro-Chem),
   "AD-67" oder "MON 4660" (= 3-Dichloracetyl-1-oxa-3-aza-spiro[4,5]decan von der Firma Nitrokemia bzw. Monsanto),
   "Dicyclonon" oder "BAS145138" oder "LAB145138" (= (= 3-Dichloracetyl-2,5,5-trimethyl-1,3-diazabiclyco[4.3.0]nonan von der Firma BASF) und
   "Furilazol" oder "MON 13900" (siehe PM, 637-638) (= (RS)-3-Dichloracetyl-5-(2-furyl)-2,2-dimethyloxazolidon)
10) Wirkstoffe vom Typ der Dichloracetonderivate, wie z.B. "MG 191" (CAS-Reg. Nr. 96420-72-3) (= 2-Dichlormethyl-2-methyl-1,3-dioxolan von der Firma Nitrokemia),
11) Wirkstoffe vom Typ der Oxyimino-Verbindungen, die als Saatbeizmittel bekannt sind, wie z.B.
   "Oxabetrinil" (PM, S. 902-903) (= (Z)-1,3-Dioxolan-2-ylmethoxyimino(phenyl)acetonitril), das als Saatbeiz-Safener gegen Schäden von Metolachlor bekannt ist,
   "Fluxofenim" (PM, S. 613-614) (= 1-(4-Chlorphenyl)-2,2,2-trifluor-1-ethanon-O-(1,3-dioxolan-2-ylmethyl)-oxim, das als Saatbeiz-Safener gegen Schäden von Metolachlor bekannt ist, und
   "Cyometrinil" oder "CGA-43089" (PM, S. 1304) (= (Z)-Cyanomethoxyimino (phenyl)acetonitril), das als Saatbeiz-Safener gegen Schäden von Metolachlor bekannt ist,
12) Wirkstoffe vom Typ der Thiazolcarbonsäureester, die als Saatbeizmittel bekannt sind, wie z.B.
   "Flurazol" (PM, S. 590-591) (= 2-Chlor-4-trifluormethyl-1,3-thiazol-5-carbonsäurebenzylester), das als Saatbeiz-Safener gegen Schäden von Alachlor und Metolachlor bekannt ist,
13) Wirkstoffe vom Typ der Napthalindicarbonsäurederivate, die als Saatbeizmittel bekannt sind, wie z.B.
   "Naphthalic anhydrid" (PM, S. 1342) (= 1,8-Naphthalindicarbonsäureanhydrid), das als Saatbeiz-Safener für Mais gegen Schäden von Thiocarbamatherbiziden bekannt ist,
14) Wirkstoffe vom Typ Chromanessigsäurederivate, wie z.B.
   "CL 304415" (CAS-Reg. Nr. 31541-57-8) (= 2-84-Carboxy-chroman-4-yl)-essigsäure von der Firma American Cyanamid),
15) Wirkstoffe, die neben einer herbiziden Wirkung gegen Schadpflanzen auch Safenerwirkung an Kulturpflanzen aufweisen, wie z.B.
   "Dimepiperate" oder "MY-93" (PM, S. 404-405) (= Piperidin-1-thiocarbonsäure-S-1-methyl-1-phenylethylester),
   "Daimuron" oder "SK 23" (PM, S. 330) (= 1-(1-Methyl-1-phenylethyl)-3-p-tolyl-harnstoff),
   "Cumyluron" = "JC-940" (= 3-(2-Chlorphenylmethyl)-1-(1-methyl-1-phenylethyl)-harnstoff, siehe JP-A-60087254),
   "Methoxyphenon" oder "NK 049" (= 3,3'-Dimethyl-4-methoxy-benzophenon),
   "CSB" (= 1-Brom-4-(chlormethylsulfonyl)-benzol) (CAS-Reg. Nr. 54091-06-4 von Kumiai),

Verbindungen von Typ der Acylsulfamoylbenzoesäureamide, z.B. der nachfolgenden Formel (VIII), die z.B. bekannt sind aus WO 99/16744.

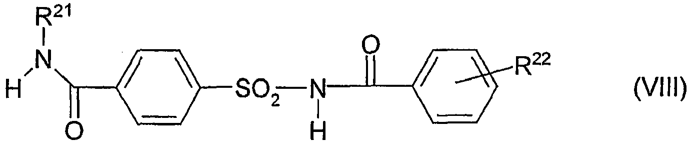

| Verbindung Nr. | R²¹ | R²² |
|---|---|---|
| S3-1 | Cyclo-Propyl | 2-OCH₃ |
| S3-2 | Cyclo-Propyl | 2-OCH₃, 5-Cl |
| S3-3 | Ethyl | 2-OCH₃ |
| S3-4 | iso-Propyl | 2-OCH₃, 5-Cl |
| S3-5 | iso-Propyl | 2-OCH₃ |

Bevorzugte Safener sind Mefenpyr, Fenchlorazol, Isoxadifen, Cloquintocet und deren C₁-C₁₀-Alkylester, insbesondere Mefenpyr-diethyl (S1-1), Fenchlorazol-ethyl (S1-6), Isoxadifen-ethyl (S1-9), Cloquintocet-mexyl (S2-1), und (S3-1).

In den erfindungsgemäßen Ölsuspensionskonzentraten sind die Safener b) im allgemeinen in Mengen von 0,1 bis 60 Gew.%, insbesondere von 2 bis 40 Gew.% enthalten.

Das Gewichtsverhältnis der Komponente a) zu der Komponente b) kann in einem weiten Bereich variieren, und liegt im allgemeinen zwischen 1:100 und 100:1, bevorzugt zwischen 1:10 und 10:1.

Als optionale agrochemische Wirkstoffe e) können beispielsweise von den Komponenten a) und b) verschiedene agrochemische Wirkstoffe wie Herbizide, Fungizide, Insektizide, Pflanzenwachstumsregulatoren und dergleichen enthalten sein. Die agrochemischen Wirkstoffe e) können in dem organischen Lösungsmittel in suspendierter und/oder gelöster Form vorliegen.

Geeignete von den Komponenten a) und b) verschiedene Wirkstoffe, die in den erfindungsgemäßen Ölsuspensionskonzentraten als Komponente e) optional enthalten sein können, sind vorzugsweise herbizide Wirkstoffe, beispielsweise:
A) Herbizide vom Typ der Phenoxyphenoxy- und Heteroaryloxyphenoxycarbonsäure-Derivate, wie
   A1) Phenoxyphenoxy- und Benzyloxyphenoxy-carbonsäure-Derivate, z.B. 2-(4-(2,4-Dichlorphenoxy)-phenoxy)-propionsäuremethylester (Diclofop-methyl), 2-(4-(4-Brom-2-chlorphenoxy)phenoxy)propionsäuremethylester (DE-A 26 01 548), 2-(4-(4-Brom-2-fluorphenoxy)phenoxy)propionsäuremethylester (US-A 4,808,750), 2-(4-(2-Chlor-4-trifluormethylphenoxy)phenoxy)propionsäuremethylester (DE-A 24 33 067), 2-(4-(2-Fluor-4-trifluormethylphenoxy)phenoxy)propionsäuremethylester (US-A 4,808,750), 2-(4-(2,4-Dichlorbenzyl)phenoxy)propionsäuremethylester (DE-A 24 17 487), 4-(4-(4-Trifluormethylphenoxy)phenoxy)pent-2-en-säureethylester, 2-(4-(4-Trifluormethylphenoxy)phenoxy)propionsäuremethylester (DE-A 24 33 067);
   A2) "Einkernige" Heteroaryloxyphenoxy-alkancarbonsäure-Derivate, z.B. 2-(4-(3,5-Dichlorpyridyl-2-oxy)phenoxy)propionsäureethylester (EP-A 0 002 925), 2-(4-(3,5-Dichlorpyridyl-2-oxy)phenoxy)propionsäurepropargylester (EP-A 0 003 114), 2-(4-(3-Chlor-5-trifluormethyl-2-pyridyloxy)phenoxy)propionsäure-methylester (EP-A 0 003 890), 2-(4-(3-Chlor-5-trifiuormethyl-2-pyridyloxy)phenoxy)propionsäureethylester (EP-A 0 003 890), 2-(4-(5-Chlor-3-fluor-2-pyridyloxy)phenoxy)propionsäurepropargylester (EP-A 0 191 736), 2-(4-(5-Trifluormethyl-2-pyridyloxy)phenoxy)propionsäurebutylester (Fluazifop-butyl);
   A3) "Zweikernige" Heteroaryloxyphenoxy-alkancarbonsäure-Derivate, z.B. 2-(4-(6-Chlor-2-chinoxalyloxy)phenoxy)propionsäuremethylester und -ethylester (Quizalofopmethyl und Quizalofopethyl), 2-(4-(6-Fluor-2-chinoxalyloxy)phenoxy)propionsäuremethylester (s. J. Pest. Sci. Vol. 10,61 (1985)), 2-(4-(6-Chlor-2-chinoxalyloxy)phenoxy)propionsäure-2-isopropylidenaminooxy-ethylester (Propaquizafop), 2-(4-(6-Chlorbenzoxazol-2-yl-oxy)phenoxy)propionsäureethylester (Fenoxaprop-ethyl) und dessen D(+) Isomer (Fenoxaprop-P-ethyl, EX) und 2-(4-(6-Chlorbenzthiazol-2-yloxy)phenoxy)propionsäureethylester (DE-A 26 40 730), 2-(4-(6-Chlorchinoxalyloxy)phenoxy)propionsäure-tetrahydro-2-furylmethylester (EP-A 0 323 727);
   B) Chloracetanilide, z.B. N-Methoxymethyl-2,6-diethyl-chloracetanilid (Alachlor), N-(3-Methoxyprop-2-yl)-2-methyl-6-ethyl-chloracetanilid (Metolachlor), N-(3-Methyl-1,2,4-oxadiazol-5-yl-methyl)-chloressigsäure-2,6-dimethylanilid, N-(2,6-Dimethylphenyl)-N-(1-pyrazolylmethyl)-chloressigsäureamid (Metazachlor);
   C) Thiocarbamate, z.B. S-Ethyl-N,N-dipropylthiocarbamat (EPTC), S-Ethyl-N,N-diisobutylthiocarbamat (Butylate);
   D) Cyclohexandionoxime, z.B. 3-(1-Allyloxyiminobutyl)-4-hydroxy-6,6-dimethyl-2-oxocyclohex-3-encarbon-säuremethylester, (Alloxydim), 2-(1-Ethoxyiminobutyl)-5-(2-ethylthiopropyl)-3-hydroxy-cyclohex-2-en-1-on (Sethoxydim), 2-(1-Ethoxyiminobutyl)-5-(2-phenylthiopropyl)-3-hydroxy-cyclohex-2-en-1-on (Cloproxydim), 2-(1-(3-Chlorallyloxy)iminobutyl)-5-(2-ethylthiopropyl)-3-hydroxy-cyclohex-2-en-1-on, 2-(1-(3-Chlorallyloxy)iminopropyl)-5-(2-ethylthiopropyl)-3-hydroxy-cyclohex-2-en-1-on (Clethodim), 2-(1-Ethoxyiminobutyl)-3-hydroxy-5-(thian-3-yl)-cyclohex-2-enon (Cycloxydim), 2-(1-Ethoxyiminopropyl)-5-(2,4,6-trimethylphenyl)-3-hydroxy-cyclohex-2-en-1-on (Tralkoxydim);
   E) Benzoylcyclohexandione, z.B. 2-(2-Chlor-4-methylsulfonylbenzoyl)-cyclohexan-1,3-dion (SC-0051, EP-A 0 137 963), 2-(2-Nitrobenzoyl)-4,4-dimethyl-cyclohexan-1,3-dion (EP-A 0 274 634), 2-(2-Nitro-4-methylsulfonylbenzoyl)-4,4-dimethylcyclohexan-1,3-dion (WO 91/13548, Mesotrione);
   F) S-(N-Aryl-N-alkyl-carbamoylmethyl)-dithiophosphonsäureester, wie S-[N-(4-Chlorphenyl)-N-isopropyl-carbamoylmethyl]-O,O-dimethyl-dithiophosphat (Anilophos).
   G) Alkylazine, z.B. wie beschrieben in WO-A 97/08156, WO-A-97/31904, DE-A-19826670, WO-A-98/15536, WO-A-8/15537, WO-A-98/15538, WO-A-98/15539 sowie auch DE-A-19828519, WO-A-98/34925, WO-A-98/42684, WO-A-99/18100, WO-A-99/19309, WO-A-99/37627 und WO-A-99/65882, vorzugsweise solche der Formel (G) 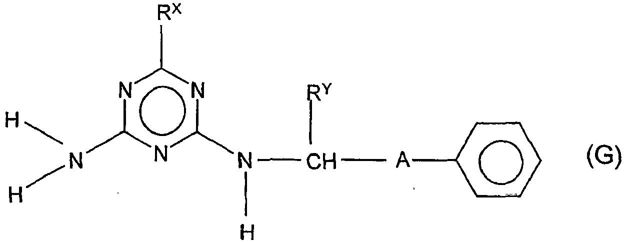 worin
      - R^{X}: (C₁-C₄)-Alkyl oder (C₁-C₄)-Haloalkyl;
      - R^{Y}: (C₁-C₄)-Alkyl, (C₃-C₆)-Cycloalkyl oder (C₃-C₆)-Cycloalkyl-(C₁-C₄)-Alkyl und
      - A: -CH₂-, -CH₂-CH₂-, -CH₂-CH₂-CH₂-, -O-, -CH₂-CH₂-O-, -CH₂-CH₂-CH₂-O-bedeuten, besonders bevorzugt solche der Formel G1-G7 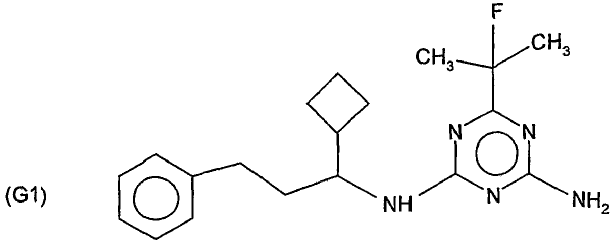 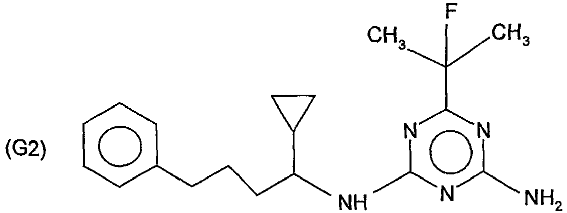 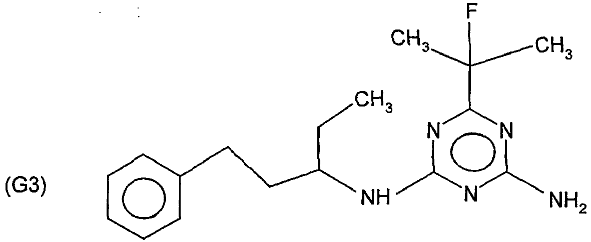 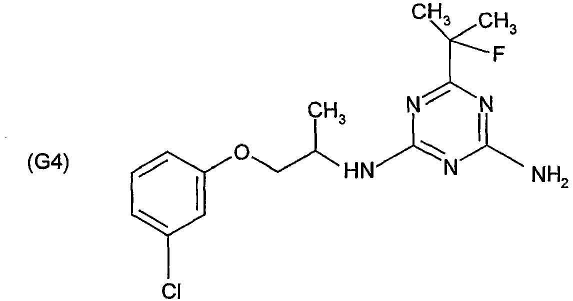 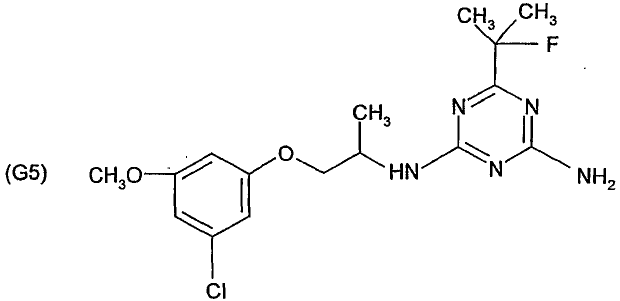 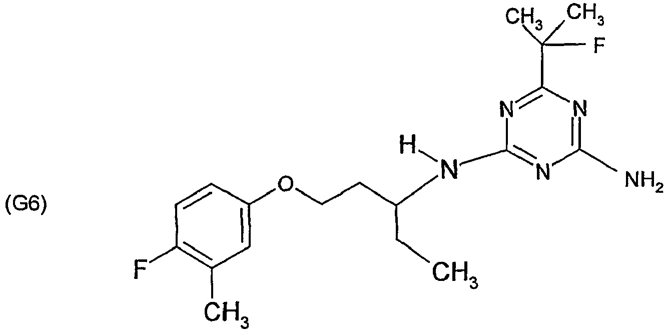 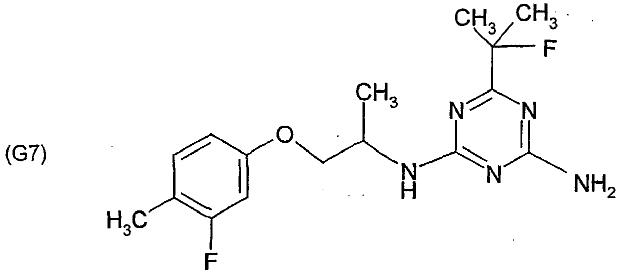
   H) Phosphor-haltige Herbizide, z.B. vom Glusosinate-Typ wie Glufosinate im engeren Sinne, d. h. D,L-2-Amino-4-[hydroxy(methyl)phosphinyl]-butansäure, Glufosinate-monoammoniumsalz, L-Glufosinate, L- oder (2S)-2-Amino-4-[hydroxy(methyl)phosphinyl]-butansäure, L-Glufosinate-monoammoniumsalz oder Bialaphos (oder Bilanafos), d.h. L-2-Amino-4-[hydroxy(methyl)phosphinyl]-butanoyl-L-alanyl-L-alanin, insbesondere dessen Natriumsalz,
      oder vom Glyphosate-Typ wie Glyphosate, d. h. N-(Phosphonomethyl)-glycin, Glyphosate-monoisopropylammoniumsalz, Glyphosate-natriumsalz, oder Sulfosate, d. h. N-(Phosphonomethyl)-glycin-trimesiumsalz = N-(Phosphonomethyl)-glycin-trimethylsulfoxoniumsalz.

Die Herbizide der Gruppen A bis H sind beispielsweise aus den oben jeweils genannten Schriften und aus "The Pesticide Manual", 12. Auflage, 2000, The British Crop Protection Council, "Agricultural Chemicals Book II - Herbicides ", by W.T. Thompson, Thompson Publications, Fresno CA, USA 1990 und "Farm Chemicals Handbook '90", Meister Publishing Company, Willoughby OH, USA,1990, bekannt.

Als optional enthaltene von den Komponenten (a) und (b) verschiedene agrochemische Wirkstoffe (e) kommen für die erfindungsgemäßen Ölsuspensionskonzentrate beispielsweise die nachfolgend genannten bekannten Wirkstoffe in Frage, wie sie in z.B. Weed Research 26, 441-445 (1986), oder "The Pesticide Manual", 12th edition, The British Crop Protection Council, 2000, und dort zitierter Literatur beschrieben sind, z.B. in Mischungsformulierungen oder als TankMischpartner. Die Verbindungen sind entweder mit dem "common name" nach der International Organization for Standardization (ISO) oder mit dem chemischen Namen, ggf. zusammen mit einer üblichen Codenummer bezeichnet und umfassen stets sämtliche Anwendungsformen wie Säuren, Salze, Ester und Isomere wie Stereoisomere und optische Isomere: acetochlor; acifluorfen; aclonifen; AKH 7088, d.h. [[[1-[5-[2-Chloro-4-(trifluoromethyl)-phenoxy]-2-nitrophenyl]-2-methoxyethylidene]-amino]-oxy]-essigsäure und -essigsäuremethylester; alachlor; alloxydim; ametryn; amitrol; AMS, d.h. Ammoniumsulfamat; anilofos; asulam; atrazin; azafenidine (DPX-R6447), aziprotryn; barban; BAS 516 H, d.h. 5-Fluor-2-phenyl-4H-3,1-benzoxazin-4-on; benazolin; benfluralin; benfuresate; bensulide; bentazone; benzofluor; benzoylprop-ethyl; benzthiazuron; bialaphos; bifenox; bispyribac-natrium (KIH-2023), bromacil; bromobutide; bromofenoxim; bromoxynil, insbesondere bromoxynil-octanoat und bromoxynil-heptanoat; butachlor; butamifos; butenachlor; buthidazole; butralin; butroxydim (ICI-0500), butylate; cafenstrole (CH-900); carbetamide; cafentrazone; CDAA, d.h. 2-Chlor-N,N-di-2-propenylacetamid; CDEC, d.h. Diethyldithiocarbaminsäure-2-chlorallylester; chlomethoxyfen; chloramben; cloransulam-methyl (XDE-565), chlorazifop-butyl, chlorbromuron; chlorbufam; chlorfenac; chlorflurenol-methyl; chloridazon; chlornitrofen; chlorotoluron; chloroxuron; chlorpropham; chlorthal-dimethyl; chlorthiamid; cinidon-ethyl, cinmethylin; clethodim; clodinafop und dessen Esterderivate (z.B. clodinafop-propargyl); clomazone; clomeprop; cloproxydim; clopyralid; cumyluron (JC 940); cyanazine; cycloate; cycloxydim; cycluron; cyhalofop und dessen Esterderivate (z.B. Butylester, DEH-112); cyperquat; cyprazine; cyprazole; 2,4-D; 2,4-DB; dalapon; desmedipham; desmetryn; di-allate; dicamba; dichlobenil; dichlorprop; diclofop und dessen Ester wie diclofop-methyl; diclosulam (XDE-564), diethatyl; difenoxuron; difenzoquat; diflufenican; diflufenzopyr-natrium (SAN-835H), dimefuron; dimethachlor; dimethametryn; dimethenamid (SAN-582H); dimidazone, 5-(4,6-Dimethylpyrimidin-2-yl-carbamoylsulfamoyl)-1-(2-pyridyl)-pyrazol-4-carbonsäuremethylester (NC-330); triaziflam (IDH-1105), cinosulfon; dimethipin, dinitramine; dinoseb; dinoterb; diphenamid; dipropetryn; diquat; dithiopyr; diuron; DNOC; eglinazine-ethyl; EL 177, d.h. 5-Cyano-1-(1,1-dimethylethyl)-N-methyl-1H-pyrazole-4-carboxamid; endothal; indanofan (MK-243), EPTC; esprocarb; ethalfluralin; ethidimuron; ethiozin; ethofumesate; F5231, d.h. N-[2-Chlor-4-fluor-5-[4-(3-fluorpropyl)-4,5-dihydro-5-oxo-1H-tetrazol-1-yl]-phenyl]-ethansulfonamid; ethoxyfen und dessen Ester (z.B. Ethylester, HN-252); etobenzanid (HW 52); 3-(4-Ethoxy-6-ethyl-1,3,5-triazin-2-yl)-1-(2,3-dihydro-1,1-dioxo-2-methylbenzo[b]thiophen-7-sulfonyl)harnstoff (EP-A 079 683); 3-(4-Ethyl-6-methoxy-1,3,5-triazin-2-yl)-1-(2,3-dihydro-1,1-dioxo-2-methylbenzo[b]thiophen-7-sulfonyl)harnstoff (EP-A 079 683); fenoprop; clomazone, fenoxaprop und fenoxaprop-P sowie deren Ester, z.B. fenoxaprop-P-ethyl und fenoxaprop-ethyl; butroxydimfenuron; flamprop-methyl; flufenacet (BAY-FOE-5043), fluazifop und fluazifop-P und deren Ester, z.B. fluazifop-butyl und fluazifop-P-butyl, florasulam (DE-570); fluchloralin; flumetsulam; fluometuron; flumiclorac und dessen Ester (z.B. Pentylester, S-23031); flumioxazin (S-482); flumipropyn; flupoxam (KNW-739); fluorodifen; fluoroglycofen-ethyl; flupropacil (UBIC-4243); fluridone; flurochloridone; fluroxypyr; flurtamone; fluthiacetmethyl (KIH-9201), fomesafen; fosamine; furyloxyfen; glufosinate; glyphosate; halosafen; halosulfuron und dessen Ester (z.B. Methylester, NC-319); haloxyfop und dessen Ester; haloxyfop-P (= R-haloxyfop) und dessen Ester; hexazinone; imazamethabenz-methyl; imazamox (AC-299263), imazapyr; imazaquin und Salze wie das Ammoniumsalz; imazapic; imazethapyr; imazosulfuron; ioxynil; isocarbamid; isopropalin; isoproturon; isouron; isoxaben; isoxapyrifop; karbutilate; lactofen; lenacil; linuron; MCPA; MCPB; mecoprop; mefenacet; mefluidid; metamitron; metazachlor; methabenzthiazuron; metam; methazole; methoxyphenone; methyldymron; metobenzuron, Mesosulfuron-methyl, mesosulfuron-methyl (WO 95/10507); metobromuron; metolachlor; S-metolachlor, metosulam (XRD 511); metoxuron; metribuzin; maleic hydrazide; molinate; monalide; monocarbamide dihydrogensulfate; monolinuron; monuron;
MT 128, d.h. 6-Chlor-N-(3-chlor-2-propenyl)-5-methyl-N-phenyl-3-pyridazinamin; MT 5950, d.h. N-[3-Chlor-4-(1-methylethyl)-phenyl]-2-methylpentanamid; foramsulfuron (WO 95/01344); naproanilide; napropamide; naptalam; NC 310, d.h. 4-(2,4-dichlorbenzoyl)-1-methyl-5-benzyloxypyrazol; neburon; nipyraclophen; nitralin; nitrofen; nitrofluorfen; norflurazon; orbencarb; oryzalin; oxadiargyl (RP-020630); oxadiazon; oxaziclomefone (MY-100), oxyfluorfen; paraquat; pebulate; pendimethalin; pentoxazone (KPP-314), perfluidone; phenisopham; phenmedipham; picloram; piperophos; pyributicarb; pirifenop-butyl; pretilachlor; procyazine; prodiamine; profluralin; proglinazine-ethyl; prometon; prometryn; propachlor; propanil; propaquizafop und dessen Ester; propazine; propham; propisochlor; propyzamide; prosulfalin; prosulfocarb; prynachlor; pyraflufen-ethyl (ET-751), chloridazon; pyrazoxyfen; pyribenzoxim, pyridate; pyriminobac-methyl (KIH-6127), pyrithiobac (KIH-2031); pyroxofop und dessen Ester (z.B. Propargylester); quinclorac; quinmerac; quizalofop, quizalofop und quizalofop-P und deren Esterderivate z.B. quizalofop-ethyl; quizalofop-P-tefuryl und -ethyl; S 275, d.h. 2-[4-Chlor-2-fluor-5-(2-propynyloxy)-phenyl]-4,5,6,7-tetrahydro-2H-indazol; secbumeton; sethoxydim; siduron; simazine; simetryn; SN 106279, d.h. 2-[[7-[2-Chlor-4-(trifluormethyl)-phenoxy]-2-naphthalenyl]-oxy]-propansäure und -methylester; flazasulfuron (FMC-97285, F-6285); sulfazuron; glyphosate-trimesium (ICI-A0224); TCA; tebutam (GCP-5544); tebuthiuron; tepraloxydim (BAS-620H), terbacil; terbucarb; terbuchlor; terbumeton; terbuthylazine; terbutryn; TFH 450, d.h. N,N-Diethyl-3-[(2-ethyl-6-methylphenyl)-sulfonyl]-1H-1,2,4-triazol-1-carboxamid; thenylchlor (NSK-850); thiazafluron; thiazopyr (Mon-13200); thidiazimin (SN-124085); thiobencarb; tiocarbazil; tralkoxydim; tri-allate; triazofenamide; triclopyr; tridiphane; trietazine; trifluralin; trimeturon; tsitodef; vernolate; WL 110547, d.h. 5-Phenoxy-1-[3-(trifluormethyl)-phenyl]-1 H-tetrazol; UBH-509; D-489; LS 82-556; KPP-300; KPP-421, MT-146, NC-324; butenachlor (KH-218); DPX-N8189; haloxyfop-etotyl (DOWCO-535); DK-8910; flumioxazin (V-53482); PP-600; MBH-001, amicarbazone, aminopyralid, beflubutamid, benzobicyclon, benzofenap, benzfendizone, butafenacil, chlorfenprop, cloprop, daimuron, dichlorprop-P, dimepipeate, dimethenamid-P, fentrazamide, flamprop-M, fluazolate, indanofan, isoxachlortole, isoxaflutole, MCPA-thioethyl, mecoprop-P, mesotrione, metamifop, penoxsulam, pethoxamid, picolinafen, profluazol, profoxydim, pyraclonil, pyrazolynate, pyridafol, pyriftalid, sulcotrione, thidiazuron.

Bevorzugte Komponenten e) sind Bromoxynil (E1) in sämtlichen seinen Anwendungsformen einschließlich der Salze und Ester, z.B. Bromoxynil-octanoat (E1.1), Bromoxynil-heptanoat (E1.2), Bromoxynil-butyrat (E1.3), Bromoxynil-Natrium (E1.4) und Bromoxynil-Kalium (E1.5); 2,4-D (E2) in sämtlichen seiner Anwendungsformen einschließlich der Salze und Ester, z.B. 2,4-D-Butotyl (E2.1), 2,4-D-butyl (E2.2), 2,4-D-dimethylammonium (E2.3), 2,4-D-diethanolamin (E2.4), 2,4-D-2-ethylhexyl (E2.5), 2,4-D-isooctyl (E2.6), 2,4-D-isopropyl (E2.7), 2,4-D-Natrium (E2.8) und 2,4-D-triethanolamin (E2.9); Dicamba (E3) in sämtlichen seiner Anwendungsformen einschließlich der Salze und Ester, z.B. Dicamba-Natrium (E3.1), Dicamba-Kalium (E3.2) und Dicamba-dimethylammonium (E3.3); Fenoxaprop (E4) in sämtlichen seiner Anwendungsformen einschließlich der Ester, z.B. Fenoxaprop-ethyl (E4.1) und Fenoxaprop-P-ethyl (E4.2); Fluroxypyr (E5) in sämtlichen seiner Anwendungsformen einschließlich der Salze und Ester, z.B. Fluroxypyr-meptyl (E5.1) und Fluroxypyr-2-butoxy-1-methylethyl (E5.2); MCPA (E6) in sämtlichen seiner Anwendungsformen einschließlich der Salze und Ester, z.B. MCPA-Natrium (E6.1), MCPA-Kalium (E6.2), MCPA-2-ethylhexyl (E6.3), MCPAbutotyl (E6.4) und MCPA-dimethylammonium (E6.5).

Soweit in den erfindungsgemäßen Ölsuspensionskonzentraten agrochemische Wirkstoffe e) enthalten sind, beträgt deren Gewichtsanteil 0,5 bis 50 Gew.-%, insbesondere 3 bis 20 Gew.-%.

Der in den erfindungsgemäßen Ölsuspensionskonzentraten enthaltene Gesamtwirkstoffgehalt (Summe der Komponente a) + b) + e)) liegt im allgemeinen zwischen 1 und 80 Gew.%, insbesondere zwischen 3 und 60 Gew.%.

Als organische Lösungsmittel (Komponente c) kommen z.B. in Frage:
1) Kohlenwasserstoffe, die unsubstituiert oder substituiert sein können, z.B.
   1a) aromatische Kohlenwasserstoffe, z.B.
      - ein- oder mehrfach alkyl-substituierte Benzole wie Toluol, Xylole, Mesitylen, Ethylbenzol, oder
      - ein- oder mehrfach alkyl-substituierte Naphthaline wie 1-Methylnaphthalin, 2-Methylnaphthalin oder Dimethylnaphthalin, oder
      - andere vom Benzol abgeleitete aromatische Kohlenwasserstoffe, wie Indan oder Tetralin^{®}, oder
      - Gemische hieraus,
   1 b) aliphatische Kohlenwasserstoffe, z.B.
      - lineare oder verzweigte Aliphaten, z.B. der allgemeinen Formel CₙH₂ₙ₊₂, wie Pentan, Hexan, Octan, 2-Methylbutan oder 2,2,4-Trimethylpentan, oder
      - cyclische, gegebenenfalls alkyl-substituierte Aliphaten, wie Cyclohexan oder Methylcyclopentan, oder
      - Gemische hieraus, wie Lösungsmittel der Exxsol^{®}D-Reihe, Isopar^{®}-Reihe oder Bayol^{®}-Reihe z.B. Bayol^{®}82 (ExxonMobil Chemicals) oder der Isane^{®}IP-Reihe oder Hydroseal^{®}G-Reihe (TotalFinaElf),
   1c) Gemische von aromatischen und aliphatischen Kohlenwasserstoffen, wie Lösungsmittel der Solvesso^{®}-Reihe z.B. Solvesso^{®}100, Solvesso^{®}150 oder Solvesso^{®}200 (ExxonMobil Chemicals), der Solvarex^{®}/Solvaro^{®}-Reihe (TotaIFinaElf) oder der Caromax^{®}-Reihe z.B. Caromak^{®}28 (Petrochem Carless), oder
   1d) halogenierte Kohlenwasserstoffe wie halogenierte aromatische und aliphatische Kohlenwasserstoffe, wie Chlorbenzol oder Methylenchlorid, oder
2) aprotische, polare Lösungsmittel, wie Ether, Ester von C₁-C₉-Alkansäuren, die mono-, di- oder polyfunktional sein können, wie deren Mono-, Di- oder Triester, z.B. mit C₁-C₁₈-Alkylalkoholen, Ketone mit geringer Tautomerietendenz, Phophorsäureester, Amide, Nitrile oder Sulfone, z.B. Düsobutyladipat, Rhodiasolv^{®} RPDE (Rhodia), Cyclohexanon, Jeffsol^{®}PC (Huntsman), γ-Butyrolacton, N-Methylpyrrolidon, Dimethylsulfoxid, Acetonitril, Tributylphosphatam oder Hostarex^{®}PO-Reihe (Clariant), oder
3) Fettsäureester, z.B. natürlichen Ursprungs, z.B. natürliche Öle wie tierische Öle oder Pflanzenöle, oder synthetischen Ursprungs, z.B. Edenor^{®}-Reihe z.B. Edenor^{®}MEPa oder Edenor^{®}MESU oder Agnique^{®}ME-Reihe oder Agnique^{®}AE-Reihe (Cognis), Salim^{®}ME-Reihe (Salim), Radia^{®}-Reihe z.B. Radia^{®}30167 (ICI), Prilube^{®}-Reihe z.B. Prilube^{®}1530 (Petrofina), Stepan^{®}C-Reihe (Stepan) oder

Witconol^{®}23-Reihe (Witco). Die Fettsäureester sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.

Beispiele für Fettsäureester wie C₁₀-C₂₂-Fettsäure-Ester sind Glycerin- und Glykolester von Fettsäuren wie C₁₀-C₂₂-Fettsäuren oder deren Umesterungsprodukte, z.B. Alkyl-Fettsäureester wie C₁-C₂₀-Alkyl-C₁₀-C₂₂-Fettsäure-Ester, wie sie z.B. durch Umesterung der vorgenannten Glycerin- oder Glykol-Fettsäureester wie C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Als Alkyl-Fettsäureester wie C₁-C₂₀-Alkyl-C₁₀-C₂₂-Fettsäure-Ester bevorzugt sind Methylester, Ethylester, Propylester, Butylester, 2-ethyl-hexylester und Dodecylester. Als Glykol- und Glycerin-Fettsäureester wie C₁₀-C₂₂-FettsäureEster bevorzugt sind die einheitlichen oder gemischten Glykolester und Glycerinester von C₁₀-C₂₂-Fettsäuren, insbesondere solcher Fettsäuren mit gerader Anzahl an Kohlenstoffatomen, z.B. Erucasäure, Laurinsäure, Palmitinsäure und insbesondere C₁₈-Fettsäuren wie Stearinsäure, Ölsäure, Linolsäure oder Linolensäure.

Tierische Öle c) sind allgemein bekannt und kommerziell erhältlich. Unter dem Begriff tierische Öle im Sinne der vorliegenden Erfindung werden z.B. Öle tierischen Ursprungs verstanden wie Waltranöl, Lebertranöl, Moschusöl oder Nerzöl.

Pflanzenöle c) sind allgemein bekannt und kommerziell erhältlich. Unter dem Begriff Pflanzenöle im Sinne der vorliegenden Erfindung werden z.B. Öle aus ölliefernden Pflanzenarten wie Sojaöl, Rapsöl, Maiskeimöl, Sonnenblumenöl, Baumwollsaatöl, Leinöl, Kokosöl, Palmöl, Distelöl, Walnussöl, Erdnussöl, Olivenöl oder Rhizinusöl, insbesondere Rapsöl verstanden, wobei unter den Pflanzenölen auch deren Umesterungsprodukte verstanden werden, z.B. Alkylester wie Rapsölmethylester oder Rapsölethylester.

Die Pflanzenöle sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.

Beispiele für Pflanzenöle sind C₁₀-C₂₂-Fettsäure-Ester von Glycerin oder Glykol mit den C₁₀-C₂₂-Fettsäuren, oder C₁-C₂₀-Alkyl-C₁₀-C₂₂-Fettsäure-Ester, wie sie z.B. durch Umesterung der vorgenannten Glycerin- oder Glykol-C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Die Pflanzenöle können in den erfindungsgemäßen Adjuvantien z.B. in Form kommerziell erhältlicher Pflanzenöle, insbesondere Rapsöle wie Rapsölmethylester, z.B. Phytorob®B (Novance, Frankreich), Edenor® MESU und Agnique®ME-Reihe (Cognis, Deutschland) Radia^{®}-Reihe (ICI), Prilube^{®}-Reihe (Petrofina) oder Biodiesel oder in Form kommerziell erhältlicher pflanzenölhaltiger Formulierungszusatzstoffe, insbesondere solcher auf Basis von Rapsölen wie Rapsölmethylester, z.B. Hasten® (Victorian Chemical Company, Australien, nachfolgend Hasten genannt, Hauptbestandteil: Rapsölethylester), Actirob®B (Novance, Frankreich, nachfolgend ActirobB genannt, Hauptbestandteil: Rapsölmethylester), Rako-Binol® (Bayer AG, Deutschland, nachfolgend Rako-Binol genannt, Hauptbestandteil: Rapsöl), Renol® (Stefes, Deutschland, nachfolgend Renol genannt, Pflanzenölbestandteil: Rapsölmethylester) oder Stefes Mero® (Stefes, Deutschland, nachfolgend Mero genannt, Hauptbestandteil: Rapsölmethylester) enthalten sein.

Beispiele für synthetische Fettsäureester sind z.B. solche die sich von Fettsäuren mit ungerader Kohlenstoffatomanzahl ableiten, wie C₁₁-C₂₁-Fettsäureester.

Bevorzugte organische Lösungsmittel sind aromatische Kohlenwasserstoffe, aliphatische Kohlenwasserstoffe und Fettsäureester wie pflanzliche Öle wie Triglyceride von Fettsäuren mit 10 bis 22C-Atomen, die sowohl gesättigt als auch ungesättigt, linear oder verzweigt sein können und gegebenenfalls weitere funktionelle Gruppen tragen, wie Maiskeimöl, Rapsöl, Sonnenblumenkernöl, Baumwollsaatöl, Leinöl, Sojaöl, Kokosöl, Palmöl, Distelöl oder Rizinusöl, und deren Umesterungsprodukte wie Fettsäurealkylester, sowie Mischungen hieraus.

Die Lösungsmittel können allein oder im Gemisch enthalten sein. Das verwendete Lösungsmittel bzw. Lösungsmittelgemisch weist bevorzugt ein geringes Lösevermögen für das verwendete bzw. die verwendeten Phenylsulfonamide (Komponente a) auf.

Der Gesamtlösungsmittelanteil in den erfindungsgemäßen Ölsuspensionskonzentraten liegt im allgemeinen zwischen 5 und 95 Gew.%, bevorzugt im Bereich zwischen 20 und 80 Gew.%. Der Anteil an polaren Lösungsmitteln wie aprotischen, polaren liegt im allgemeinen unter 20 Gew.-%, bevorzugt im Bereich von 0 bis 10 Gew.%.

Die in den erfindungsgemäßen Ölsuspensionskonzentraten enthaltenen Sulfosuccinate (Komponente d) können z.B. Mono- oder Diester der Sulfobernsteinsäure sein, vorzugsweise solche der allgemeinen Formel (III)

R¹-(X₁)ₙ-O-CO-CH₂-CH(SO₃M)-CO-O-(X₂)ₘ-R² (III)

, worin
- R¹: H oder ein unsubstituierter oder substituierter C₁-C₃₀-Kohlenwasserstoffrest wie C₁-C₃₀-Alkyl oder C₇-C₃₀-Alkylaryl bedeutet,
- R²: H oder ein unsubstituierter oder substituierter C₁-C₃₀-Kohlenwasserstoffrest wie C₁-C₃₀-Alkyl oder C₇-C₃₀-Alkylaryl bedeutet, oder ein Kation ist, z.B. ein Metallkation wie ein Alkali- oder Erdalkalimetallkation, oder ein Ammoniumkation wie NH₄, Alkyl-, Alkylaryl- oder Poly(arylalkyl)phenyl-ammoniumkation,
- X¹, X²: unabhängig voneinander gleich oder verschieden eine Spacereinheit wie eine Polyethereinheit oder eine Polyestereinheit bedeuten,
- n,m: unabhängig voneinander gleich oder verschieden Null oder 1 sind, vorzugsweise Null sind, und
- M: ein Kation ist, z.B. ein Metallkation wie ein Alkali- oder Erdalkalimetallkation, oder ein Ammoniumkation wie NH₄, Alkyl-, Alkylaryl- oder Poly(arylalkyl)phenyl-ammoniumkation.

Bevorzugt sind Sulfosuccinate der Formel (III), worin R¹ und R² unabhängig voneinander gleich oder verschieden lineare, verzweigte oder cyclische, gesättigte oder ungesättigte C₁-C₂₀- vorzugsweise C₄₋C₁₈-Alkylreste sind, wie Methyl-, Ethyl-, Butyl-, Hexyl-, Cyclohexyl-, Octyl wie 2-Ethylhexyl-, Decyl-, Tridecyl- oder Octadecyl-Reste, oder R¹ und R² sind C₇-C₂₀-Alkylarylreste, wie Nonylphenyl, 2,4,6-Tri-secbutylphenyl, 2,4,6-Tris-(1-phenylethyl)-phenyl, Alkylbenzyl oder ein Hydrozimtrest, X₁ und X₂ unabhängig voneinander gleich oder verschieden Polyethereinheiten sind, wie Polyethylenglykole -(C₂H₄O)ₚ- oder Polypropylenglykole -(C₃H₆O)ₚ- mit p=1 bis p=20, insbesondere p=1 bis p=12, oder Polyestereinheiten sind, wie Polyhydroxybuttersäure -(CH[CH₃]-CH₂-COO)_{q}- oder Polymilchsäure -(CH[CH₃]-COO)_{q}- mit q=1 bis q=15, insbesondere q=1 bis q=8,
n, m unabhängig voneinander gleich oder verschieden Null oder 1 sind, vorzugsweise Null sind, und M ein Kation ist, z.B. ein Metallkation, wie Alkali- oder Erdalkalimetallkation, oder ein Ammoniumkation, welches alkyl-substituiert sein kann.

Erfindungsgemäß enthaltene Sulfosuccinate sind, beispielsweise
a1) ein- oder zweifach mit linearen, cyclischen oder verzweigten aliphatischen, cycloaliphatischen und/oder aromatischen Alkoholen verestertes Sulfosuccinat, beispielsweise mit 1 bis 22 C-Atomen im Alkylrest, vorzugsweise ein- oder zweifach mit Methanol, Ethanol, (Iso)propanol, (Iso)butanol, (Iso)pentanol, (Iso)hexanol, Cyclohexanol, (Iso)heptanol, (Iso)octanol (insbesondere: Ethylhexanol), (Iso)nonanol, (Iso)decanol, (Iso)undecanol, (Iso)dodecanol oder (Iso)tridecanol verestertes Mono- oder Dialkalisulfosuccinat, insbesondere Mono- oder Dinatriumsulfosuccinat,
a2) ein- oder zweifach mit (Poly) Alkylenoxidaddukten von Alkoholen verestertes Sulfosuccinat, beispielsweise mit 1 bis 22 C-Atomen im Alkylrest und 1 bis 200, vorzugsweise 2 bis 200 Alkylenoxideinheiten im (Poly) Alkylenoxidanteil, vorzugsweise ein- oder zweifach mit Dodecyl/Tetradecyl-Alkohol +2-5 mol Ethylenoxid oder mit i-Tridecyl+3mol Ethylenoxid verestertes Mono- oder Dialkalisulfosuccinat, insbesondere Mono- oder Dinatriumsulfosuccinat,
a3) das Dialkali, vorzugsweise das Dinatriumsalz von einfach mit Aminen oder aminoterminierten (Poly) Alkylenoxidaddukten von Alkoholen, Aminen, Fettsäuren, Estern oder Amiden umgesetztem und nachfolgend sulfoniertem Maleinsäureanhydrid, beispielsweise mit 1 bis 22C-Atomen im Alkylrest und 1 bis 200, vorzugsweise 2 bis 200 Alkylenoxy-Einheiten im (Poly) Alkylenoxidteil, vorzugsweise das Dinatriumsalz von einfach mit Kokosfettamin umgesetztem und nachfolgend sulfoniertem Maleinsäureanhydrid,
a4) das Dialkali, vorzugsweise das Dinatriumsalz von einfach mit Amiden oder (Poly) Alkylenoxidaddukten von Amiden umgesetztem und nachfolgend sulfoniertem Maleinsäureanhydrid, beispielsweise mit 1 bis 22 C-Atomen im Alkylrest und 1 bis 200, vorzugsweise 2 bis 200 Alykylenoxy-Einheiten im (Poly) Alkylenoxidteil, vorzugsweise das Dinatriumsalz von einfach mit Oleylamid+2 mol Ethylenoxid umgesetztem und nachfolgend sulfoniertem Maleinsäureanhydrid und/oder
a5) das Tetraalkali, vorzugsweise das Tetranatriumsalz von N-(1,2-dicarboxyethyl-)-N-Octadecylsulfo-succinamat.

Beispiele kommerziell erhältlicher und im Rahmen der vorliegenden Erfindung bevorzugter Sulfosuccinate der Gruppen a1) bis a5) sind nachfolgend aufgeführt:
a1) Natrium-Dialkylsulfosuccinat, z.B. Natrium-Di(C₄-C₁₈)alkylsulfosuccinat wie Natrium-Diisooctylsulfosuccinat, vorzugsweise Natrium-Di(2-ethylhexyl)sulfosuccinat, kommerziell beispielsweise in Form der Aerosol^{®}-Marken (Cytec), der Agrilan^{®}- oder Lankropol^{®}-Marken (Akzo Nobel), der Empimin^{®}-Marken (Albright&Wilson), der Cropol^{®}-Marken (Croda), der Lutensit^{®}-Marken (BASF) der Triton^{®}-Marken (Union Carbide), der Geropon^{®}-Marken (Rhodia) oder der Imbirol^{®}-, Madeol^{®}- oder Polirol^{®}-Marken (Cesalpinia) erhältlich,
a2) Natrium- Alkoholpolyethylenglykolethersulfosuccinat, kommerziell beispielsweise in Form von Geropon^{®} ACR-Marken (Rhodia) erhältlich,
a3) Dinatrium-Alkoholpolyethylenglykolethersemisulfosuccinat, kommerziell beispielsweise in Form der Aerosol^{®}-Marken (Cytec), der Marlinat^{®}- oder Sermul^{®}-Marken (Condea), der Empicol^{®}-Marken (Albright&Wilson), der Secosol^{®}-Marken (Stepan), der Geropon^{®}-Marken (Rhodia), der Disponil^{®}- oder Texapon^{®}-Marken (Cognis) oder der Rolpon^{®}-Marken (Cesalpinia) erhältlich,
a4) Dinatrium-N-Alkylsulfosuccinamat, kommerziell beispielsweise in Form der Aerosol^{®}-Marken (Cytec), der Rewopol^{®}- oder Rewoderm^{®}-Marken (Rewo), der Empimin^{®}-Marken (Albright&Wilson), der Geropon^{®}-Marken (Rhodia) oder der Polirol^{®}-Marken (Cesalpinia) erhältlich,
a5) Dinatrium-Fettsäureamidpolyethylenglykolethersemisulfosuccinat, kommerziell beispielsweise in Form der Elfanol^{®}- oder Lankropol^{®}-Marken (Akzo Nobel), der Rewoderm^{®}-, Rewocid^{®}- oder Rewopol^{®}-Marken (Rewo), der Emcol^{®}-Marken (Witco), der Standapol^{®}-Marken (Cognis) oder der Rolpon^{®}-Marken (Cesalpinia) erhältlich, und
a6) Tetranatrium-N-(1,2-dicarboxyethyl)-N-Octadecyl-sulfosuccinamat, kommerziell beispielsweise in Form von Aerosol 22^{®}- (Cytec) erhältlich.

Kommerziell sind Sulfosuccinate zum Beispiel als Aerosol^{®}- (Cytec), Agrilan^{®}- oder Lankropol^{®}- (Akzo Nobel), Empimin^{®}- (Huntsman), Cropol^{®}- (Croda), Lutensit^{®}-(BASF), Triton^{®}GR-Reihe (UnionCarbide), Imbirol^{®}-/Madeol^{®}-/Polirol^{®}- (Cesalpinia); Geropon^{®}AR-Reihe oder Geropon^{®}SDS (Rhodia) erhältlich.

Bevorzugte Sulfosuccinate sind z.B. die Natrium-, Kalium- und Ammoniumsalze von Bis(alkyl)sulfosuccinaten, wobei die Alkylreste gleich oder verschieden 4 bis 16 Kohlenstoffatome enthalten, und bevorzugt Butyl-, Hexyl-, Octyl- wie 2-Ethylhexyl- oder Decyl-Reste sind, die linear oder verzweigt sein können.

Der Gesamtanteil des Sulfosuccinats bzw. der Sulfosuccinate in den erfindungsgemäßen Ölsuspensionskonzentraten liegt im allgemeinen zwischen 0,1 und 60 Gew.%, insbesondere im Bereich zwischen 0,5 und 30 Gew.%.

Als übliche Hilfs- und Zusatzstoffe (Komponente f) können in den erfindungsgemäßen Ölsuspensionskonzentraten z.B. noch enthalten sein: Tenside wie Emulgatoren und Dispergatoren, Verdickungs- und Thixotropiermittel, Netz-, Anti-Drift-, Haft-, Penetrations-, Konservierungs- und Frostschutzmittel, Antioxidantien, Lösungsvermittler, Füll-, Träger- und Farbstoffe, Entschäumer, Düngemittel, Verdunstungshemmer, sowie den pH-Wert und die Viskosität beeinflussende Mittel.

Als Emulgatoren und Dispergatoren kommen Tenside aus der Gruppe der nichtionischen Emulgatoren und Dispergatoren in Frage, ausgewählt aus der Gruppe
1) polyalkoxylierte, vorzugsweise polyethoxylierte, gesättigte und ungesättigte aliphatische Alkohole,
   · mit 8 bis 24 C-Atomen im Alkylrest, der sich von den entsprechenden Fettsäuren oder aus petrochemischen Produkten ableitet, und
   · mit 1 bis 100, vorzugsweise 2 bis 50, Ethylenoxideinheiten (EO), wobei die freie Hydroxy-Gruppe gegebenenfalls alkoxyliert ist,
   · die z. B. kommerziell als Genapol^{®}X- und Genapol^{®}O-Reihe (Clariant), Crovol^{®}M-Reihe (Croda) oder Lutensol^{®}Reihe (BASF) erhältlich sind,
2) polyalkoxylierte, vorzugsweise polyethoxylierte Arylalkylphenole, wie z. B. 2,4,6-Tris-(1-phenylethyl)-phenol (Tristyrylphenol) mit einem mittleren Ethoxylierungsgrad zwischen 10 und 80, bevorzugt 16 bis 40, wie z. B. Soprophor^{®}BSU (Rhodia) oder HOE S 3474 (Clariant),
3) polyalkoxylierte, vorzugsweise polyethoxylierte Alkylphenole mit einem oder mehreren Alkylresten, wie z. B. Nonylphenol oder Tri-*sec*-butylphenol, und einem Ethoxylierungsgrad zwischen 2 und 40, bevorzugt 4 bis 15, wie z. B. Arkopal^{®}N-Reihe oder Sapogenat^{®}T-Reihe (Clariant),
4) polyalkoxylierte, vorzugsweise polyethoxylierte Hydroxyfettsäuren oder Hydroxyfettsäuren enthaltene Glyceride, wie z. B. Ricinin bzw. Rizinusöl, mit einem Ethoxylierungsgrad zwischen 10 und 80, bevorzugt 25 bis 40, wie z. B. Emulsogen^{®}EL-Reihe (Clariant) oder Agnique^{®}CSO-Reihe (Cognis),
5) polyalkoxylierte, vorzugsweise polyethoxylierte Sorbitanester, wie z. B. Atplus^{®}309 F (Uniqema) oder Alkamuls^{®}-Reihe (Rhodia)
6) Di- und Tri-block-copolymere, z.B. aus Alkylenoxiden, z.B. aus Ethylen- und Propylenoxid mit mittleren Molmassen zwischen 200 und 10000, vorzugsweise 1000 bis 4000 g/mol, wobei der Massenanteil des polyethoxylierte Blocks zwischen 10 und 80% variiert, wie z. B. Genapol^{®}PF-Reihe (Clariant), Pluronic^{®}-Reihe (BASF), oder Synperonic^{®}PE-Reihe (Uniqema),

Bevorzugte nichtionische Emulgatoren und Dispergatoren sind z.B. polyethoxylierte Alkohole, polyethoxylierte Triglyceride, die Hydroxyfettsäuren enthalten und Polyethylenoxid-Polypropylenoxid-Block-Copolymere.

Der Gesamtanteil an nichtionischen Emulgatoren und Dispergatoren in den erfindungsgemäßen Ölsuspensionskonzentraten liegt im allgemeinen zwischen 0 und 20 Gew.%. Werden nichtionische Emulgatoren und Dispergatoren, neben ihren emulgierenden/dispergierenden Eigenschaften, auch zur Erhöhung der biologischen Effektivität, z. B. als Penetrations- oder Haftmittel, eingesetzt, kann sich ihr Anteil in den erfindungsgemäßen Ölsuspensionskonzentraten auf bis zu 60 Gew.% erhöhen.

Es kommen auch ionische Emulgatoren und Dispergatoren in Frage, z.B.:
1) polyalkoxylierte, vorzugsweise polyethoxylierte Emulgatoren/Dispergatoren (vgl. Komponente e), die ionisch modifiziert sind, z. B. durch Umsetzung der endständigen freien Hydroxylfunktion des Polyethylenoxidblocks zu einem Sulfat- oder Phosphatester (z. B. als Alkali- und Erdalkalimetallsalze), wie z. B. Genapol^{®}LRO oder Dispergiermittel 3618 (Clariant), Emulphor^{®} (BASF) oder Crafol^{®}AP (Cognis),
2) Alkali- und Erdalkalimetallsalze von Alkylarylsulfonsäuren mit linearer oder verzweigter Alkylkette, wie Phenylsulfonat CA oder Phenylsulfonat CAL (Clariant), Atlox^{®} 3377BM (ICI), Empiphos^{®}TM-Reihe (Huntsman)
3) Polyelektrolyte, wie Ligninsulfonate, Kondensationsprodukte aus Naphthalinsulfonat und Formaldehyd, Polystyrolsulfonat oder sulfonierte ungesättigte oder aromatische Polymere (Polystyrole, Polybutadiene oder Polyterpene), wie Tamol^{®}-Reihe (BASF), Morwet^{®}D425 (Witco), Kraftsperse^{®}-Reihe (Westvaco), Borresperse^{®}-Reihe (Borregard).

Bevorzugte ionische Emulgatoren/Dispergatoren sind z.B. Salze von Alkylarylsulfonsäuren und Polyelektrolyte aus der Polykondensation von Naphthalinsulfonat und Formaldehyd.

Der Gesamtanteil an ionischen Emulgatoren und Dispergatoren in den erfindungsgemäßen Ölsuspensionskonzentraten liegt im allgemeinen zwischen 0 und 20 Gew.%, insbesondere zwischen 0 und 8 Gew.%.

Als Verdickungs- und Thixotropiermittel kommen z.B. in Frage:
1) modifizierte natürliche Silikate, wie chemisch modifizierte Bentonite, Hectorite, Attapulgite, Montmorillonite, Smektite oder andere Silikatmineralien, wie Bentone^{®} (Elementis), Attagel^{®} (Engelhard), Agsorb^{®} (Oil-Dri Corporation) oder Hectorite^{®} (Akzo Nobel)
2) synthetische Silikate, wie Silikate der Sipernat^{®}-, Aerosil^{®}- oder Durosil^{®}-Reihe (Degussa), der CAB-O-SIL^{®}-Reihe (Cabot) oder der Van Gel-Reihe (R.T. Vanderbilt),
3) Verdicker auf Basis synthetischer Polymere, wie Verdicker der Thixin^{®}- oder Thixatrol^{®}-Reihe (Elementis).
4) Verdicker auf Basis natürlicher Polymere und natürlicher Öle, z.B. aus der Thixin^{®}- oder Thixatrol^{®}-Reihe (Elementis).

Bevorzugte Verdickungs- und Thixotropiermittel sind z.B. modifizierte Schichtsilikate und Verdicker auf Basis synthetischer Polymere.

Der Anteil an Verdickungs- und Thixotropiermitteln in den erfindungsgemäßen Ölsuspensionskonzentraten liegt im allgemeinen zwischen 0 und 5 Gew.%, insbesondere zwischen 0,2 und 3 Gew.%.

Bevorzugt sind erfindungsgemäße Ölsuspensionskonzentrate, enthaltend:
a) 0,1 bis 30 Gew.-% eines oder mehrere herbizider Wirkstoffe aus der Gruppe der Sulfonamide,
b) 2 bis 40 Gew.-% eines oder mehrere Safener,
c) 20 bis 80 Gew.-% eines oder mehrere Lösungsmittel,
d) 0,5 bis 30 Gew.-% eines oder mehrere Sulfosuccinate,
e) 3 bis 20 Gew.-% eines oder mehrere von a) und b) verschiedener agrochemischer Wirkstoffe,
f) 0 bis 20 Gew.-% eines oder mehrere nichtionischer Emulgatoren und Dispergatoren,
   0 bis 8 Gew.-% eines oder mehrerer ionischer Emulgatoren und Dispergatoren
   0 bis 3 Gew.-% eines oder mehrerer Verdickungs- und Thixotriopiermittel.

In einer bevorzugten Ausführungsform enthält das erfindungsgemäße Ölsuspensionskonzentrat
a) ein oder mehrere herbizide Wirkstoffe der Formel (I) oder Formel (IV) und/oder deren Salze, vorzugsweise A1.1 bis A19.2,
b) einen Safener aus der Gruppe S1-1, S1-9 und S2-1,
c) ein organisches Lösungsmittel aus der Gruppe der aliphatischen Kohlenwasserstoffe, der Gemische von aromatischen und aliphatischen Kohlenwasserstoffe und der Pflanzenöle wie Rapsölmethylester, und
d) ein Alkali Di(C₄-C₁₈)alkylsulfosuccinat wie Natrium Di(C₄-C₁₈)alkylsulfosuccinat.

Als besonders bevorzugte Beispiele seien erfindungsgemäße Ölsuspensionskonzentrate genannt, welche die nachfolgend genannten Komponenten enthalten, ohne dass dadurch eine Einschränkung erfolgen soll, wobei Solvesso ein Lösungsmittel aus der Solvesso^{®}-Reihe, vorzugsweise Solvesso^{®}200, Bayol ein Lösungsmittel aus der Bayol^{®}-Reihe, vorzugsweise Bayol^{®}82, Edenor = Edenor^{®}MESU und Actirob = Actirob^{®}B bedeutet.

In einer bevorzugten Ausführungsform als Komponente a) z.B. verschiedene Phenylsulfonylharnstoffe der Formel (II) und/oder deren Salze miteinander kombiniert werden, z.B.
Mesosulfuron-methyl + lodosulfuron-methyl,
Mesosulfuron-methyl + lodosulfuron-methyl-Natrium,
Mesosulfuron-methyl + Foramsulfuron,
Mesosulfuron-methyl + Foramsulfuron-Natrium,
Mesosulfuron-methyl-Natrium + lodosulfuron-methyl,
Mesosulfuron-methyl-Natrium + Iodosulfuron-methyl-Natrium,
Mesosulfuron-methyl-Natrium + Foramsulfuron,
Mesosulfuron-methyl-Natrium + Foramsulfuron-Natrium,
Foramsulfuron + lodosulfuron-methyl,
Foramsulfuron + lodosulfuron-methyl-Natrium,
Foramsulfuron-Natrium + lodosulfuron-methyl,
Foramsulfuron-Natrium + lodosulfuron-methyl-Natrium.

Die Sulfonamide a) und deren Mischungen, z.B. die vorgenannten Wirkstoffmischungen von Phenylsulfonylharnstoffen der Formel (II) und/oder deren Salze, können mit einem oder mehreren Safenern kombiniert werden, insbesondere mit den Safenern Mefenpyr-diethyl (S1-1), Fenchlorazol-ethyl (S1-6), Isoxadifen-ethyl (S1-9), Cloquintocet-mexyl (S2-1) und (S3-1).

Sämtliche vorgenannten Kombinationen können auch einen oder mehrere agrochemische Wirkstoffe (e) enthalten, insbesondere ausgewählt aus der Gruppe (E1), (E1.1), (E1.2), (E1.3), (E1.4), (E1.5), (E2), (E2.1), (E2.2), (E2.3), (E2.4), (E2.5), (E2.6), (E2.7), (E2.8), (E2.9), (E3), (E3.1), (E3.2), (E3.3), (E4), (E4.1), (E4.2), (E5), (E5.1), (E5.2), (E6), (E6.1), (E6.2), (E6.3), (E6.4), (E6.5).

Die als Komponente a) enthaltenen Phenylsulfonylaminocarbonyltriazolinone, insbesondere solche der Formel (I) wie Flucarbazone oder Propoxycarbazone, und Heteroarylsulfonylaminocarbonyltriazolinone, insbesondere solche der Formel (IV), (VI) und (VII) wie z.B. bekannt aus der WO 03/026427, z.B. die Verbindungen (A20.1), (A20.2), (A21.1), (A21.2), (A22.1), (A22.2), (A23.1), (A23.2), (A24.1), (A24.2), (A25.1), (A25.2), (A26.1), (A26.2), (A27.1), (A27.2), (A28.1), (A28.2), (A29.1), (A29.2), (A30.1), (A30.2), (A31.1), (A31.2), (A32.1), (A32.2), (A33.1), (A33.2), (A34.1), (A34.2), (A35.1), (A35.2), (A36.1), (A36.2), (A37.1), (A37.2), können auch ohne Zusatz von Sulfosuccinaten Ölsuspensionskonzentrate hoher chemischer und physikalischer Stabilität bilden. Solche Ölsuspensionskonzentrate sind ebenfalls Gegenstand der vorliegenden Erfindung.

Sofern in den erfindungsgemäßen Ölsuspensionskonzentraten als Komponente a) Mischungen mehrerer Sulfonamide enthalten sind, z.B. die vorstehend genannten Mischungen von Sulfonylharnstoffen der Formel (II) und/oder deren Salzen, liegt zumindest eines der Sulfonamide in suspendierter Form vor, es können auch alle Sulfonamide suspendiert vorliegen.

Die erfindungsgemäßen Ölsuspensionskonzentrate können durch bekannte Verfahren, z.B. durch Vermischen der Komponenten hergestellt werden. So kann z.B. eine Vormischung hergestellt werden, wobei das Sulfosuccinat d) in dem organischen Lösungsmittel c) gelöst wird und dieser Lösung, gegebenenfalls weitere Hilfs- und Zusatzstoffe f) zugegeben werden. Dann werden gegebenenfalls verwendete lösliche agrochemische Wirkstoffe b) und e) in der Vormischung gelöst. Nach Abschluß des Lösungsprozesses wird festes Sulfonamid a) und gegebenenfalls verwendete unlösliche Wirkstoffe b) und e) in die Mischung suspendiert. Die grobe Suspension wird, gegebenenfalls nach einer Vorvermahlung, einer Feinvermahlung unterzogen.

In einer anderen Ausführungsvariante wird festes Sulfonamid a), sowie gegebenenfalls verwendete unlösliche Komponenten b), e) und f), in eine Mischung aus dem organischen Lösungsmittel c) und dem Sulfosuccinat d) suspendiert und einer Vermahlung unterzogen. Gegebenenfalls verwendete lösliche Wirkstoffe b) und e) sowie Hilfs- und Zusatzstoffe aus f), die keiner Vermahlung bedürfen oder für den Mahlvorgang nicht notwendig sind, werden nach der Vermahlung zugesetzt.

Zur Herstellung der Mischungen können gängige Mischapparate verwendet werden, die gegebenenfalls temperiert werden. Zur Vorvermahlung können z.B. Hochdruckhomogenisatoren oder nach dem Rotor-Stator Prinzip arbeitende Mühlen verwendet werden, wie Ultraturax-Homogenisatoren, z.B. der Fa. IKA, oder Zahnkolloidmühlen, z.B. der Fa. Puck. Für die Feinvermahlung können z.B. diskontinuierliche Perlmühlen, z.B. der Fa. Drais oder kontinuierliche Perlmühlen, der z.B. Fa. Bachofen verwendet werden. Je nach den Eigenschaften der eingesetzten Komponenten, sowie verfahrens- und sicherheitstechnsichen Anforderungen und aus wirtschaftlichen Gründen, kann das Herstellverfahren angepaßt und gegebenenfalls auf eine Vorvermahlung oder auch auf eine Feinvermahlung verzichtet werden.

Die zur Herstellung eingesetzten Komponenten a) bis f) können Wasser als Nebenbestandteil enthalten, welches sich in den erfindungsgemäßen Ölsuspensionskonzentraten wiederfindet. Die erfindungsgemäßen Ölsuspensionskonzentrate können daher geringe Mengen von Wasser enthalten, im allgemeinen von 0 bis 5 Gew.%. Bevorzugterweise werden die erfindungsgemäßen Ölsuspensionskonzentrate keinem weiteren Trocknungsprozeß unterzogen.

Zur Anwendung können die erfindungsgemäßen Ölsuspensionskonzentrate gegebenenfalls in üblicher Weise, z.B. zu Suspensionen, Emulsionen, Suspoemulsionen oder Lösungen, vorzugsweise von Suspensionen, verdünnt werden, z.B. mittels Wasser. Es kann vorteilhaft sein, erhaltenen Spritzbrühen weitere agrochemische Wirkstoffe (z.B. Tankmischpartner in Form entsprechender Formulierungen) und/oder zur Anwendung übliche Hilfs- und Zusatzstoffe, z.B. selbstemulgierende Öle wie Pflanzenöle oder Paraffinöle und/oder Düngemittel zuzugeben. Gegenstand der vorliegenden Erfindung sind daher auch solche herbiziden Mittel, auf Basis der erfindungsgemäßen Ölsuspensionskonzentrate.

Die erfindungsgemäßen herbiziden Mittel weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden gut erfaßt. Dabei können die Mittel z.B. im Vorsaat-, Vorauflauf- oder Nachauflaufverfahren ausgebracht werden. Im einzelnen seien beispielhaft einige Vertreter der mono- und dikotylen Unkrautflora genannt, die durch die erfindungsgemäßen herbiziden Mittel kontrolliert werden können, ohne daß durch die Nennung eine Beschränkung auf bestimmte Arten erfolgen soll.

Auf der Seite der monokotylen Unkrautarten werden z.B. Apera spica venti, Avena spp., Alopecurus spp., Brachiaria spp., Digitaria spp., Lolium spp., Echinochloa spp., Panicum spp., Phalaris spp., Poa spp., Setaria spp. sowie Bromus spp. wie Bromus catharticus, Bromus secalinus, Bromus erectus, Bromus tectorum und Bromus japonicus und Cyperusarten aus der annuellen Gruppe und auf seiten der perennierenden Spezies Agropyron, Cynodon, Imperata sowie Sorghum und auch ausdauernde Cyperusarten gut erfaßt.

Bei dikotylen Unkrautarten erstreckt sich das Wirkungsspektrum auf Arten wie z.B. Abutilon spp., Amaranthus spp., Chenopodium spp., Chrysanthemum spp., Galium spp. wie Galium aparine, Ipomoea spp., Kochia spp., Lamium spp., Matricaria spp., Pharbitis spp., Polygonum spp.,Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern.

Unter den spezifischen Kulturbedingungen im Reis vorkommende Schadpflanzen wie z.B. Echinochloa, Sagittaria, Alisma, Eleocharis, Scirpus und Cyperus werden von den erfindungsgemäßen Mitteln ebenfalls hervorragend bekämpft.

Werden die erfindungsgemäßen herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der erfindungsgemäßen herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Kombinationen ist in der Regel günstig. Als besonderer Vorteil fällt ins Gewicht, daß die in den herbizide Mitteln verwendeten und wirksamen Dosierungen von herbiziden Verbindungen so gering eingestellt werden können, daß ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäßen Kombination von Wirkstoffen wird eine erhebliche Reduzierung der nötigen Aufwandmenge der Wirkstoffe ermöglicht.

Die genannten Eigenschaften und Vorteile sind in der praktischen Unkrautbekämpfung von Nutzen, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Mittel hinsichtlich der beschriebenen Eigenschaften deutlich übertroffen.

Obgleich die erfindungsgemäßen herbiziden Mittel eine ausgezeichnete herbizide Aktivität gegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, oder Gramineen-Kulturen wie Weizen, Gerste, Roggen, Hafer, Hirse, Reis oder Mais, nur unwesentlich oder gar nicht geschädigt. Die vorliegenden Verbindungen eignen sich aus diesen Gründen sehr gut zur selektiven Bekämpfung von unerwünschtem Pflanzenwuchs in landwirtschaftlichen Nutzpflanzungen oder in Zierpflanzungen.

Darüber hinaus weisen die erfindungsgemäßen herbiziden Mittel hervorragende wachstumsregulatorische Eigenschaften bei Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die erfindungsgemäßen herbiziden Mittel auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der erfindungsgemäßen Mittel in wirtschaftlich bedeutenden transgenen Kulturen von Nutz- und Zierpflanzen, z. B. von Gramineen-Kulturen wie Weizen, Gerste, Roggen, Hafer, Hirse, Reis und Mais oder auch Kulturen von Zuckerrübe, Baumwolle, Soja, Raps, Kartoffel, Tomate, Erbse und anderen Gemüsesorten. Vorzugsweise können die erfindungsgemäßen Mittel als Herbizide in Nutzpflanzenkulturen eingesetzt werden, welche gegenüber den phytotoxischen Wirkungen der Herbizide resistent sind bzw. gentechnisch resistent gemacht worden sind.

Bei der Anwendung der erfindungsgemäßen herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der vorliegenden Erfindung ist weiterhin auch ein Verfahren zur Bekämpfung von unerwünschtem Pflanzenwuchs, vorzugsweise in Pflanzenkulturen wie Getreide (z.B. Weizen, Gerste, Roggen, Hafer, Reis, Mais, Hirse), Zuckerrübe, Zuckerrohr, Raps, Baumwolle und Soja, besonders bevorzugt in monokotylen Kulturen wie Getreide, z.B. Weizen, Gerste, Roggen, Hafer, Kreuzungen davon wie Triticale, Reis, Mais und Hirse, wobei man ein oder mehrere erfindungsgemäße herbizide Mittel auf die Schadpflanzen, Pflanzenteile, Pflanzensamen oder die Fläche auf der die Pflanzen wachsen, z.B. die Anbaufläche appliziert.

Die Pflanzenkulturen können auch gentechnisch verändert oder durch Mutationsselektion erhalten sein und sind bevorzugt tolerant gegenüber Acetolactatsynthase (ALS)-Inhibitoren.

Das Ölsuspensionskonzentrat der vorliegenden Erfindung weist eine ausgezeichnete chemische Stabilität während der Herstellung und Lagerung auf und eignet sich insbesondere auch für Kombinationen von Wirkstoffen mit unterschiedlichen physikalisch-chemischen Eigenschaften, z. B. eines in organischen Lösungsmitteln schwerlöslichen herbiziden Phenylsulfonamids mit einem löslichen Safener und gegebenenfalls weiteren löslichen agrochemischen Wirkstoffen. Außerdem weist das Ölsuspensionskonzentrat eine ausgezeichnete physikalische Stabilität, eine gute Applizierbarkeit und Anwenderfreundlichkeit, sowie eine hohe biologische Effektivität und Selektivität auf.

Wenn nicht anders beschrieben wurden die in den nachfolgenden Beispielen genannten Ölsuspensionskonzentrate wie folgt hergestellt: Es wurde eine Vormischung hergestellt wobei, das Sulfosuccinat d) in dem Lösungsmittel c) gelöst wurde und dieser Lösung, die weiteren Hilfs- und Zusatzstoffe f) zugegeben wurden. Dann wurde der Safener b) in der Vormischung gelöst. Nach Abschluß des Lösungsprozesses wurde festes Sulfonamid a) in die Mischung suspendiert. Die grobe Suspension wurde, nach einer Vorvermahlung, einer Feinvermahlung unterzogen.

Die in den nachfolgenden Beispielen verwendeten Abkürzungen haben folgende Bedeutung:
- Iodosulfuron: = 3-(4-Methoxy-6-methyl-1,3,5-triazin-2-yl)-1-(2-methoxycarbonyl-5-iod-phenylsulfonyl)-harnstoff Natriumsalz
- Thifensulfuron: = 3-(4-Methoxy-6-methyl-1,3,5-triazin-2-yl-)-1-(2-methoxycarbonyl-thiophensulfonyl)-harnstoff Natriumsalz
- Mefenpyr: = 1-(2,4-Dichlorphenyl)-5-(ethoxycarbonyl)-5-methyl-2-pyrazolin-3-carbonsäureethylester
- Bentone^{®} 34: = modifiziertes Schichtsilikat, Elementis
- Edenor^{®} MESU: = Rapsölmethylester, Cognis
- Emulsogen^{®} EL-400: = polyethoxyliertes Rizinusöl mit 40 Einheiten Ethylenoxid, Clariant
- Genapol^{®} PF10: = Polyethylenoxid-Polypropylenoxid-Blockcopolymer mit 10% Einheiten Ethylenoxid, Clariant
- Genapol^{®} V4739: = polyethoxyliertes iso-Tridecanol mit 6 Einheiten Ethylenoxid, methoxy-verkappt, Clariant
- Jeffsol^{®} PC: = Propylencarbonat, Huntsman
- Solvesso^{®} 200: = aromatisches Mineralöl (Siedebereich 219-281 °C), Exxon
- Thixatrol^{®} ST: = Thixothropiermittel auf Basis eines Riziniusölderivates
- Triton^{®} GR-7M E: = Di(2-Ethylhexyl)sulfosuccinat Natriumsalz in aromatischem Lösungsmittel, Union Carbide
- 8W40°C: = achtwöchiger Lagerversuch bei 40°C

### Beispiel 1:

### Herstellung eines Ölsuspensionskonzentrats

Die Konzentration an lodosulfuron wurde mittels HPLC vor und nach der Herstellung des Ölsuspensionskonzentrats bestimmt.

**Tabelle 1: Chemische Stabilität der Komponente a) bei der Herstellung (alle Angaben in Gramm)**

| | Bsp. 1.1 | Bsp. 1.2 |
|---|---|---|
| Iodosulfuron | 5,00 | 5,00 |
| Mefenpyr | 15,00 | 15,00 |
| Triton ^{®}GR-7M E | -- | 25,00 |
| Edenor^{®} MESU | 62,64 | 37,38 |
| Genapol^{®} PF10 | 5,00 | 5,00 |
| Emulsogen^{®} EL-400 | 5,00 | 5,00 |
| Thixatrol^{®} ST | 1,00 | 1,00 |

| Konzentration von Iodosulfuron | | |
|---|---|---|
| vor Herstellung | 5,00 | 5,00 |
| nach Herstellung | 3,50 | 4,89 |

### Beispiel 2:

### Herstellung und Lagerung eines Ölsuspensionskonzentrats

Die Konzentration an lodosulfuron wurde mittels HPLC vor und nach der Herstellung des Ölsuspensionskonzentrats sowie nach 8-wöchiger Lagerung bei 40°C bestimmt.

**Tabelle 2: Chemische Stabilität der Komponente a), bei Herstellung und Lagerung (alle Angaben in Gew.%)**

| | Bsp. 2.1 | Bsp. 2.2 | Bsp. 2.3 |
|---|---|---|---|
| Iodosulfuron | 5,00 | 10,00 | 12,00 |
| Mefenpyr | 15,00 | 30,00 | 36,00 |
| Solvesso^{®} 200 | 42,00 | 28,00 | 20,00 |
| Jeffsol^{®} PC | 1,00 | 0,50 | -- |
| Triton^{®} GR-7M E | 25,00 | 20,00 | 20,00 |
| Genapol^{®} V4739 | 5,00 | 5,00 | 5,00 |
| Genapol^{®} PF10 | 3,00 | 3,00 | 3,00 |
| Emulsogen^{®} EL-400 | 3,00 | 3,00 | 3,00 |
| Bentone^{®} 34 | 1,00 | 0,50 | -- |

| Konzentration von Iodosulfuron | | | |
|---|---|---|---|
| vor Herstellung | 5,00 | 10,00 | 12,0 |
| nach Herstellung | 4,97 | 9,92 | 11,5 |
| nach 8W40°C | 4,73 | 9,73 | 11,5 |

### Beispiel 3:

### Herstellung eines Ölsuspensionskonzentrats

Die Konzentration an Thifensulfuron wurde mittels HPLC vor und nach der Herstellung des Ölsuspensionskonzentrats bestimmt.

| | Bsp. 3.1 | Bsp. 3.2 |
|---|---|---|
| Thifensulfuron | 8,00 | 8,00 |
| Mefenpyr | 24,00 | 24,00 |
| Triton ^{®}GR-7M E | -- | 25,00 |
| Edenor^{®} MESU | 50,64 | 25,38 |
| Genapol^{®} PF10 | 5,00 | 5,00 |
| Emulsogen^{®} EL-400 | 5,00 | 5,00 |
| Thixatrol^{®} ST | 1,00 | 1,00 |

Das erfindungsgemäße Beispiel 3.2 zeigte eine signifikant höhere chemische Stabilität als das Vergleichsbeispiel 3.1.

## Patentansprüche

1. Ölsuspensionskonzentrat, enthaltend
a) ein oder mehrere herbizide Wirkstoffe aus der Gruppe der Sulfonamide, in suspendierter Form,
b) ein oder mehrere Safener,
c) ein oder mehrere organische Lösungsmittel,
d) ein oder mehrere Sulfosuccinate,
e) gegebenenfalls einen oder mehrere von a) und b) verschiedene agrochemische Wirkstoffe, und
f) als übliche Hilfs- und Zusatzstoffe Tenside aus der Gruppe der nichtionische Emulgatoren und Dispergatoren, ausgewählt aus der Gruppe polyethoxylierte, gesättigte und ungesättigte aliphatische Alkohole,
- mit 8 bis 24 C-Atomen im Alkylrest, der sich von den entsprechenden Fettsäuren oder aus petrochemischen Produkten ableitet, und
- mit 1 bis 100, vorzugsweise 2 bis 50, Ethylenoxideinheiten (EO), wobei die freie Hydroxy-Gruppe gegebenenfalls alkoxyliert ist;
polyethoxylierte Arylalkylphenole, polyethoxylierte Alkylphenole mit einem oder mehreren Alkylresten, polyethoxylierte Hydroxyfettsäuren oder Hydroxyfettsäuren enthaltene Glyceride, polyethoxylierte Sorbitanester und Di- und Tri-block-copolymere; und gegebenenfalls weitere übliche Hilfs- und Zusatzstoffe;
wobei die Sulfonamide (Komponente a)) im organischen Lösungsmittel (Komponente c)) zu mehr als 80 Gew.-% ungelöst in fein verteilter Form vorliegen.

2. Ölsuspensionskonzentrat gemäß Anspruch 1, worin als Komponente a) enthalten sind, ein oder mehrere herbizide Wirkstoffe aus der Gruppe der Phenylsulfonamide, vorzugsweise der Phenylsulfonylaminocarbonyltriazolinone und Phenylsulfonylharnstoffe, oder der Heteroarylsulfonamide, vorzugsweise der Heteroarylulfonylaminocarbonyltriazolinone und Heteroarylsulfonylharnstoffe.

3. Ölsuspensionskonzentrat gemäß Anspruch 1 oder 2, worin als Komponente b) enthalten sind, ein oder mehrere Safener aus der Gruppe Dichlorphenylpyrazolin-3-carbonsäure und ihre Ester, 5,5 -Diphenyl-2-isoxazolin-3-carbonsäure ihre Ester und 8-Chinolinoxyessigsäure und ihre Ester.

4. Ölsuspensionskonzentrat gemäß einem oder mehreren der Ansprüche 1 bis 3, worin als Komponente c) enthalten sind, ein oder mehrere Lösungsmittel aus der Gruppe unsubstituierter oder substituierte Kohlenwasserstoffe, aprotische polare Lösungsmittel und Fettsäureester.

5. Ölsuspensionskonzentrat gemäß einem oder mehreren der Ansprüche 1 bis 4, worin als Komponente d) enthalten sind, ein oder mehrere Sulfosuccinate aus der Gruppe der Mono- und Diester der Sulfobernsteinsäure.

6. Ölsuspensionskonzentrat gemäß einem oder mehreren der Ansprüche 1 bis 5, zusätzlich enthaltend e) einen oder mehrere von a) und b) verschiedene agrochemische Wirkstoffe und/oder f) weitere übliche Hilfs- und Zusatzstoffe.

7. Verfahren zur Herstellung eines Ölsuspensionskonzentrats gemäß einem oder mehreren der Ansprüche 1 bis 6, worin die Komponenten gemischt und gegebenenfalls vermahlen werden.

8. Verfahren zur Bekämpfung von Schadpflanzen, worin eine wirksame Menge eines Ölsuspensionskonzentrats gemäß einem oder mehreren der Ansprüche 1 bis 6 auf die Schadpflanzen, Teile der Pflanzen, Pflanzensamen, die Fläche auf der Pflanzen wachsen appliziert wird.

9. Verwendung eines Ölsuspensionskonzentrats gemäß einem oder mehreren der Ansprüche 1 bis 6, zur Bekämpfung von Schadpflanzen.

10. Verwendung eines Ölsuspensionskonzentrats gemäß einem oder mehreren der Ansprüche 1 bis 6, zur Herstellung eines herbiziden Mittels.

11. Verwendung gemäß Anspruch 10, worin das herbizide Mittel eine Suspension, Emulsion, Suspoemulsion oder eine Lösung ist.

12. Herbizides Mittel, enthaltend ein Ölsuspensionskonzentrat gemäß einem oder mehreren der Ansprüche 1 bis 6.

13. Verfahren zur Bekämpfung von Schadpflanzen, worin eine wirksame Menge eines herbiziden Mittels gemäß Anspruch 12 auf die Schadpflanzen, Teile der Pflanzen, Pflanzensamen, die Fläche auf der Pflanzen wachsen appliziert wird.

14. Verwendung eines herbiziden Mittels gemäß Anspruch 12, zur Bekämpfung von Schadpflanzen.

## Claims

1. An oil suspension concentrate, comprising
a) one or more herbicidally active compounds from the group of the sulfonamides in suspended form,
b) one or more safeners,
c) one or more organic solvents,
d) one or more sulfosuccinates,
e) optionally one or more agrochemically active compounds different from a) and b), and
f) as customary auxiliaries and additives surfactants from the group of the nonionic emulsifiers and dispersants selected from the group of polyethoxylated saturated and unsaturated aliphatic alcohols,
- having 8 to 24 carbon atoms in the alkyl radical which is derived from the corresponding fatty acids or from petrochemical products and
- having 1 to 100, preferably 2 to 50, ethylene oxide units (EO), where the free hydroxy group is optionally alkoxylated;
polyethoxylated arylalkylphenols, polyethoxylated alkylphenols having one or more alkyl radicals, polyethoxylated hydroxy fatty acids or glycerides comprising hydroxy fatty acids, polyethoxylated sorbitan esters and di- and tri-block copolymers; and optionally further customary auxiliaries and additives;
where the sulfonamides (component a)) are present in the organic solvent (component c)) in finely divided form, more than 80% by weight undissolved.

2. The oil suspension concentrate as claimed in claim 1 which comprises, as component a), one or more herbicidally active compounds from the group of the phenylsulfonamides, preferably the phenylsulfonylaminocarbonyltriazolinones and phenylsulfonylureas, or of the heteroarylsulfonamides, preferably the heteroarylsulfonylaminocarbonyltriazolinones and heteroarylsulfonylureas.

3. The oil suspension concentrate as claimed in claim 1 or 2 which comprises, as component b), one or more safeners from the group consisting of dichlorophenylpyrazoline-3-carboxylic acid and its esters, 5,5-diphenyl-2-isoxazoline-3-carboxylic acid its esters and 8-quinolineoxyacetic acid and its esters.

4. The oil suspension concentrate as claimed in one or more of claims 1 to 3 which comprises, as component c), one or more solvents from the group consisting of unsubstituted or substituted hydrocarbons, aprotic polar solvents and fatty acid esters.

5. The oil suspension concentrate as claimed in one or more of claims 1 to 4 which comprises, as component d), one or more sulfosuccinates from the group of the mono- and diesters of sulfosuccinic acid.

6. The oil suspension concentrate as claimed in one or more of claims 1 to 5, which additionally comprises e) one or more agrochemically active compounds different from a) and b) and/or f) further customary auxiliaries and additives.

7. A process for preparing an oil suspension concentrate as claimed in one or more of claims 1 to 6, which comprises mixing and, if appropriate, grinding the components.

8. A method for controlling harmful plants, which comprises applying an effective amount of an oil suspension concentrate as claimed in one or more of claims 1 to 6 to the harmful plants, to parts of the plants, to plant seeds and/or to the area on which the plants grow.

9. The use of an oil suspension concentrate as claimed in one or more of claims 1 to 6 for controlling harmful plants.

10. The use of an oil suspension concentrate as claimed in one or more of claims 1 to 6 for preparing a herbicidal composition.

11. The use as claimed in claim 10 wherein the herbicidal composition is a suspension, an emulsion, a suspoemulsion or a solution.

12. A herbicidal composition, comprising an oil suspension concentrate as claimed in one or more of claims 1 to 6.

13. A method for controlling harmful plants which comprises applying an effective amount of a herbicidal composition as claimed in claim 12 to the harmful plants, to parts of the plants, to plant seeds and/or to the area on which the plants grow.

14. The use of a herbididal composition as claimed in claim 12 for controlling harmful plants.

## Revendications

1. Concentrat de suspension huileuse, contenant
a) une ou plusieurs substances actives herbicides du groupe des sulfonamides, sous forme suspendue,
b) un ou plusieurs phytoprotecteurs,
c) un ou plusieurs solvants organiques,
d) un ou plusieurs sulfosuccinates,
e) le cas échéant une ou plusieurs substances actives agrochimiques différentes de a) et de b), et
f) comme adjuvants et additifs usuels, des agents tensioactifs du groupe des émulsifiants et des dispersants non ioniques, choisis dans le groupe des alcools aliphatiques saturés et insaturés, polyéthoxylés,
- présentant 8 à 24 atomes de carbone dans le radical alkyle, qui est dérivé des acides gras correspondants ou de produits pétrochimiques, et
- présentant 1 à 100, de préférence 2 à 50, unités d'oxyde d'éthylène (OE), le groupe hydroxy libre étant le cas échéant alcoxylé ;
des arylalkylphénols polyéthoxylés, des alkylphénols polyéthoxylés présentant un ou plusieurs radicaux alkyle, des acides gras hydroxy polyéthoxylés ou des glycérols contenant des acides gras hydroxy, des esters de sorbitane polyéthoxylés et des copolymères à deux ou trois blocs ; et le cas échéant d'autres adjuvants et additifs usuels ; les sulfonamides (composant a)) se trouvant dans le solvant organique (composant c)) à raison de plus de 80% en poids sous forme non dissoute, finement répartie.

2. Concentrat de suspension huileuse selon la revendication 1, contenant, comme composant a), une ou plusieurs substances actives herbicides du groupe constitué par les phénylsulfonamides, de préférence des phénylsulfonylaminocarbonyltriazolinones et des phénylsulfonylurées, ou des hétéroarylsulfonamides, de préférence des hétéroarylsulfonylaminocarbonyltriazolinones et des hétéroarylsulfonylurées.

3. Concentrat de suspension huileuse selon la revendication 1 ou 2, contenant, comme composant b), un ou plusieurs phytoprotecteurs du groupe constitué par l'acide dichlorophénylpyrazoline-3-carboxylique et ses esters, l'acide 5,5-diphényl-2-isoxazoline-3-carboxlique et ses esters et l'acide 8-quinoléinoxyacétique et ses esters.

4. Concentrat de suspension huileuse selon l'une ou plusieurs des revendications 1 à 3, contenant, comme composant c), un ou plusieurs solvants du groupe des hydrocarbures non substitués ou substitués, des solvants polaires aprotiques et des esters d'acides gras.

5. Concentrat de suspension huileuse selon l'une ou plusieurs des revendications 1 à 4, contenant, comme composant d), un ou plusieurs sulfosuccinates du groupe des monoesters et diesters de l'acide sulfosuccinique.

6. Concentrat de suspension huileuse selon l'une ou plusieurs des revendications 1 à 5, contenant en outre e) une ou plusieurs substances actives agrochimiques différentes de a) et b) et/ou f) d'autres adjuvants et additifs usuels.

7. Procédé pour la préparation d'un concentrat de suspension huileuse selon l'une ou plusieurs des revendications 1 à 6, les composants étant mélangés et le cas échéant broyés.

8. Procédé pour lutter contre les plantes nuisibles, une quantité active d'un concentrat de suspension huileuse selon l'une ou plusieurs des revendications 1 à 6 étant appliquée sur les plantes nuisibles, les parties de plantes, les graines de plantes, la surface sur laquelle les plantes poussent.

9. Utilisation d'un concentrat de suspension huileuse selon l'une ou plusieurs des revendications 1 à 6 pour lutter contre les plantes nuisibles.

10. Utilisation d'un concentrat de suspension huileuse selon l'une ou plusieurs des revendications 1 à 6 pour préparer un agent herbicide.

11. Utilisation selon la revendication 10, dans laquelle l'agent herbicide est une suspension, une émulsion, une suspoémulsion ou une solution.

12. Agent herbicide, contenant un concentrat de suspension huileuse selon l'une ou plusieurs des revendications 1 à 6.

13. Procédé pour lutter contre les plantes nuisibles, une quantité active d'un agent herbicide selon la revendication 12 étant appliquée sur les plantes nuisibles, les parties de plantes, les graines de plantes, la surface sur laquelle les plantes poussent.

14. Utilisation d'un agent herbicide selon la revendication 12 pour lutter contre les plantes nuisibles.
